# EUROPEAN PATENT APPLICATION

(11) **EP 4 631 341 A1**
(43) Date of publication of application: **15.10.2025**
(21) Application number: 25163571.0
(22) Date of filing: 13.03.2025
(51) Int. Cl.: A01D 41/14

(54) **AGRICULTURAL HEADER FLOAT ARM POSITION AND PRESSURE CONTROL SYSTEM**

(30) Priority: 10.04.2024 US 202463632295 P; 10.10.2024 US 202418911766
(71) Applicant: Deere & Company, Moline, IL 61265 (US)
(72) Inventor: Modak, Shreyas P., Mannheim (DE); Jarquin, Shally, Mannheim (DE); Brimeyer, Alex, Mannheim (DE); Marvin, Paul D., Mannheim (DE)
(74) Representative: Holst, Sönke

(57) **Abstract**

The present invention relates to a system for controlling a position of one or more float arms, wherein the system comprises a float arm (302) pivotably coupled to a header frame (304), wherein the system further comprises a first source of pressurized fluid (904). A first valve (912) is in fluid communication with the pressurized fluid source and is movable between a first and a second position, in the second position preventing fluid passage from to source (904). The system further includes a second valve (908) positioned downstream of the first valve (912) and is movable between a first and a second position, in the first position being configured to permit fluid communication to a first location (910) downstream of the second valve (908) and in the second position to prevent fluid communication.

## Description

The present disclosure relates generally to agricultural headers and, particularly, to hinged agricultural headers that include float arm movable between a locked configuration and an unlocked configuration.

### Background of the Disclosure

Agricultural draper headers can be connected to an agricultural harvester and can be used to cut crop from a field during a harvesting operation. In some instances, draper headers are hinged draper headers that include wings that are pivotable attached and can move in response to changes in a curvature of the ground. Hinged draper headers may also include float arms that are pivotably connected to the wing. The float arms support a cutter bar and allow the cutter bar to flex when the float arms are in an unlocked configuration.

### Summary of the Disclosure

An example of the present disclosure is directed to a system for controlling operation of one or more float arms of an agricultural header. The example system may include a float arm pivotably connected to a frame of the agricultural header; a source of pressurized fluid including a fluid at a first fluid pressure; a first valve in fluid communication with the source of pressurized fluid; and a second valve positioned downstream of the first valve. The float arm is moveable between a locked configuration in which the float arm is secured in a retracted position and an unlocked configuration in which the float arm is released from the retracted position. The first valve is movable between a first position in which the first valve transmits passage of the fluid from the source of pressurized fluid and a second position that prevents passage of the fluid from the source of pressurized fluid. The second valve is movable between a third position configured selectively to provide fluid communication to a first location downstream of the second valve and a fourth position configured to prevent fluid communication with the first location. In the third position, the second valve is configured to permit flow of the fluid from the source of pressurized fluid to the first location to cause the float arm to move to the locked configuration in response to the first valve being in the first position. In the third position, the second valve is also configured to permit flow of the fluid from the first location to cause the float arm to move to the unlocked configuration in response to the first valve being in the second position.

The example system may include a pressure sensor at a location downstream of the first valve, the pressure sensor configured to sense a pressure of the fluid at the first location. The second valve is movable to the fourth position in response to the sensed pressure at the first location satisfying a first threshold pressure value.

The second valve includes an orifice configured to control a flow rate of fluid through the first valve.

The flow rate is within a range of five liters per min (L/min) (1.3 gallons per minute (gal/min) to 20 L/min (5.3 gal/min).

The example system may include a gauge wheel movable between an extended position and a retracted position.

In response to a first input, the gauge wheel is moved to the retracted position, the first valve is moved the second position, and the second valve is moved the third position.

In response to a second input, the gauge wheel is moved to the extended position, the first valve is moved the first position, and the second valve is moved to the third position.

The example system may also include an actuator coupled to the float arm. In response to the first valve being positioned in the first position and the second valve being positioned in the third position, fluid from the source of pressurized fluid actuates the actuator to move the float arm into the locked configuration.

The example system may also include an actuator coupled to the float arm. In response to the first valve being in the second position and the second valve being in the third position, fluid is released from the first location to actuate the actuator to move the float arm into the unlocked configuration.

Another example of the present disclosure is directed to a method of actuating a float arm between one of a locked configuration and an unlocked configuration. The example method may include selectively configuring a first valve and a second valve to transmit fluid from a source of pressurized fluid to a first location to move a float arm between a locked configuration and an unlocked configuration.

Selectively configuring the first valve and the second valve may include: moving the first valve that is movable between a first position and a second to the first position to transmit fluid from a source of pressurized fluid to a second valve; moving the second valve moveable between a third position and a fourth position, to a third position to transmit the fluid from the source of pressurized fluid to a first location; and placing the float arm in the locked configuration in response to the fluid being transmitted to the first location.

The example method may also include sensing a pressure of the fluid in the first location and moving the second valve to the fourth position to prevent transmission of fluid from the source of pressurized fluid to the first location in response to the pressuring satisfying a selected pressure threshold.

Selectively configuring the first valve and the second valve may include: moving the first valve to the second position or maintaining the first valve in the second position; and moving the second valve to the third position to cause the fluid to flow out of the first location; and placing the float arm in the unlocked configuration in response to flow of the fluid out of the first location.

Another example of the present disclosure is directed to an agricultural header. The example agricultural header may include: a first section; a wing section including a first end pivotably connected to the first section having a float arm; a cutter bar including a first portion and second portion; and a float arm control system. The float arm is moveable between a locked configuration in which the float arm is secured in a retracted position and an unlocked configuration in which the float arm is released from the retracted position. The first portion of the cutter bar extends along the first section and the second portion of the cutter bar extending along the wing section. The second portion is connected to the float arm. The float arm control system includes: a source of pressurized fluid including a fluid at a first fluid pressure; a first valve in fluid communication with the source of pressurized fluid; and a second valve positioned downstream of the first valve. The first valve is movable between a first position in which the first valve transmits passage of the fluid from the source of pressurized fluid and a second position that prevents passage of the fluid from the source of pressurized fluid. The second valve is movable between a third position configured selectively to provide fluid communication to a first location downstream of the second valve and a fourth position configured to prevent fluid communication with the first location. The second valve, in the third position, is configured to permit flow of the fluid from the source of pressurized fluid to the first location to cause the float arm to move to the locked configuration in response to the first valve being in the first position, and, in the third position, configured to permit flow of the fluid from the first location transmission of the fluid from the first location to cause the float arm to move to the unlocked configuration in response to the first valve being in the second position.

The example agricultural header may also include a pressure sensor at a location downstream of the first valve. The pressure sensor is configured to sense a pressure of the fluid at the first location. The second valve is movable to the fourth position in response to the sensed pressure at the first location satisfying a first threshold pressure value.

The second valve may include an orifice configured to control a flow rate of fluid through the first valve.

The flow rate may be within a range of five liters per min (L/min) (1.3 gallons per minute (gal/min) to 20 L/min (5.3 gal/min).

The example agricultural header may also include a gauge wheel movable between an extended position and a retracted position.

The example agricultural header may also include an actuator coupled to the float arm. In response to the first valve being positioned in the first position and the second valve being positioned in the third position, fluid from the source of pressurized fluid actuates the actuator to move the float arm into the locked configuration.

The example agricultural header may also include an actuator coupled to the float arm. In response to the first valve being in the second position and the second valve being in the third position, fluid is released from the first location to actuate the actuator to move the float arm into the unlocked configuration.

Other features and aspects will become apparent by consideration of the detailed description and accompanying drawings.

### Brief Description of the Drawings

The detailed description of the drawings refers to the accompanying figures in which:
FIG. 1 is a perspective view of an example combine harvester with an example hinged draper header attached thereto, according to some implementations of the present disclosure.
FIG. 2 is a partial schematic view of an example hinged draper header, according to some implementations of the present disclosure.
FIG. 3 is a side view of a portion of an example hinged draper header, according to some implementations of the present disclosure.
FIG. 4 is another side view of the portion of the hinged draper header of FIG. 3 showing an angular range of rotation of pivot of a float arm along with a plurality of positions illustrated along the range of rotation.
FIGs. 5 and 6 are schematic views of an example hydraulic circuit configured to control operation of a hydraulic actuator, according to some implementations of the present disclosure.
FIG. 7 is a schematic view of an example electronic control system operable to control a position of float arms of a header, according to some implementations of the present disclosure.
FIG. 8 is a flowchart of an example method for moving a position of a float arm between a locked configuration and an unlocked configuration, according to some implementations of the present disclosure.
FIG. 9 is a schematic view of another example hydraulic circuit configured to control operation of a hydraulic actuator, according to some implementations of the present disclosure.
FIG. 10 is a flowchart of an example method for altering a position of a float arm between a locked configuration and an unlocked configuration, according to some implementations of the present disclosure.
FIG. 11 is a schematic view of another example hydraulic circuit that includes a third valve operable to isolate selectively an accumulator from a hydraulic actuator, according to some implementations of the present disclosure.
FIG. 12 a schematic view of another example hydraulic circuit, according to some implementations of the present disclosure.
FIG. 13 is a schematic view of another example hydraulic circuit, according to some implementations of the present disclosure.
FIG. 14 schematic view of another example hydraulic circuit, according to some implementations of the present disclosure.
FIG. 15 is a block diagram illustrating an example computer system used to provide computational functionalities associated with described algorithms, methods, functions, processes, flows, and procedures as described in the present disclosure, according to some implementations of the present disclosure.

### Detailed Description

For the purposes of promoting an understanding of the principles of the present disclosure, reference will now be made to the implementations illustrated in the drawings, and specific language will be used to describe the same. It will nevertheless be understood that no limitation of the scope of the disclosure is intended. Any alterations and further modifications to the described devices, systems, or methods and any further application of the principles of the present disclosure are fully contemplated as would normally occur to one skilled in the art to which the disclosure relates. In particular, it is fully contemplated that the features, components, and/or steps described with respect to one implementation may be combined with the features, components, and/or steps described with respect to other implementations of the present disclosure.

Words of orientation, such as "up," "down," "top," "bottom," "above," "below," "leading," "trailing," "front," "back," "forward," and "rearward," used in the context of the provided examples, would be understood by one skilled in the art and are not intended to be limiting to the disclosure. For example, for a particular type of vehicle in a conventional configuration and orientation and being operated in a conventional manner, one skilled in the art would understand these terms in the context in which they are used and as those terms apply to a particular vehicle. For example, one skilled in the art would appreciate what the forward direction is in the context of a direction that an agricultural harvester normally moves when actively harvesting crop during a crop harvesting operation. Further, one skilled in the art would appreciate what the reverse direction would be for the agricultural harvester during normal operation of the agricultural harvester.

Additionally, the term "forward" (and the like) corresponds to a forward direction of travel of a work machine (e.g., header or combine harvester), such as during a harvesting operation. Likewise, the term "rearward" or "reverse" (and the like) corresponds to a direction opposite the forward direction of travel. In this regard, for example, a "forward facing" feature on a header may generally face in the direction that the head travels during normal operation, while a "rearward facing" feature may generally face opposite that direction.

Also as used herein, with respect to a work machine, unless otherwise defined or limited, the term "leading" (and the like) indicates a direction of travel of the work machine during normal operation (e.g., the forward direction of travel of a harvester vehicle carrying a header) or indicates a position on a work machine of a portion of the work machine that is ahead of another component in the context of a direction of movement of the work machine. Similarly, the term "trailing" (and the like) indicates a direction that is opposite the leading direction or indicates a position on a work machine of a portion of the work machine that trails or is behind of another component in the context of a direction of movement of the work machine. In this regard, for example, a "leading" edge of a header may be generally disposed at the front of the header, with respect to the direction travel of the header during normal operation (e.g., as carried by a combine harvester). Likewise, a "trailing" edge of a header may be generally disposed at the back of the header opposite the leading edge, with respect to the direction of travel of the header during normal operation.

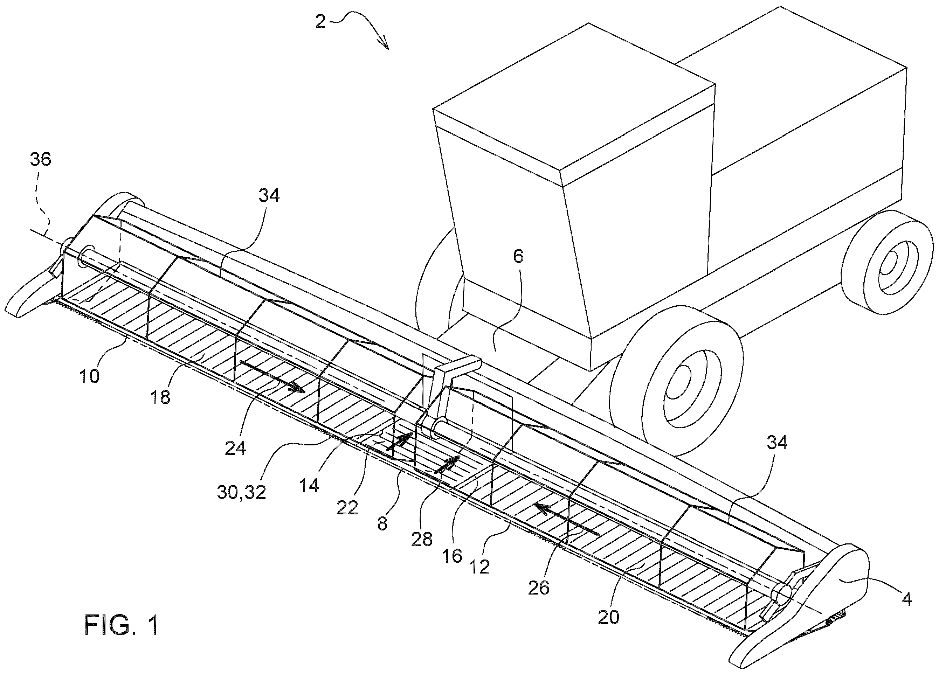

A hinged draper header (hereinafter "header"), such as the example hinged draper header 4 shown in FIG. 1 and described in more detail below, includes a center section and wing sections that flank the center section. The wing sections are pivotably coupled to the center section at opposing ends thereof. Consequently, the wing sections are operable to pivot relative to the center section, which allows the wing sections to conform to changes in ground topography.

A cutter bar extends along a width of the header. In some instances, the cutter bar is coupled to the header via a plurality of float arms attached to the wing sections. The float arms are movable between a locked configuration and an unlocked configuration. The cutter bar has a rigid configuration when the float arms are in the locked configuration. With the float arms in the unlocked configuration, the cutter bar has a flexible configuration, and the cutter bar is able to flex and, for example, during a harvesting operation, conform to a surface of the ground. Thus, the cutter bar is able to flex (e.g., bend) to conform to a topography of the ground when the float arms are in the unlocked configuration.

In some instances, a lift force is applied to the each of the wing sections, such as via an actuator (e.g., one or more hydraulic cylinders) to control an amount of weight of each of the wind sections that is permitted to be transferred to the ground. These applied lift forces control an amount of "float" experienced by the wing sections. In some instances, an arrangement of the float arms on the wing sections can cause one or both of the wing sections to lift and the associated float arms to move downwards when the applied lift forces reach a defined level. This movement of the wing sections and float arms can be detrimental to crop harvest quality and, in some instances, can cause the float arms to engage with and become driven into the ground. As a result, continued advancement of the header with the float arms driven into the ground (referred to as "pushing") results in damage to the field (for example, the formation of ruts in the field) and, potentially, damage to the headers.

The present disclosure provides float arm systems, methods, and apparatuses that operate to transfer a portion of the weight of the float arms to the associated wing sections to countermeasure the lifting of the wing sections, thereby maintaining harvest quality and avoiding pushing and the associated damage associated therewith.

FIG. 1 is a perspective view of an example combine harvester 2 and a hinged draper header 4 coupled to a feederhouse 6 of the combine harvester 2. The draper header 4 includes a center section 8 and first and second wing sections 10, 12 pivotably connected to the center section 8. The first wing section 10 is pivotably connected to a first lateral side 14 of center section 8, and the second wing section 12 is pivotably connected to a second lateral side 16 of the center section 8. The pivotable connections of the first and second wing sections 10, 12 allows the wing sections 10, 12 to follow a topography of the ground.

The draper header 4 includes a first endless belt 18 provided on the first wing section 10 and a second endless belt 20 provided on the second wing section 12. The center section 8 of the draper header 4 includes a third endless belt 22. The first and second endless belts 18 and 20 operate to transport harvested crop towards the center section 8, as indicated by the arrows 24 and 26, respectively. The third endless belt 22 operates to move the harvested crop received from the first and second endless belts 20 and 22 towards the feederhouse 6 in the direction of arrow 28, where the harvested crop is received by the feederhouse 6 and conducted into the combine harvester 2 for further processing.

The draper header 4 also includes a cutter bar 30 located on a leading edge 32 of the draper header 4. The cutter bar 30 operates to sever crop planted in a field. Additionally, the draper header 4 includes a reel 34. The reel 34 rotates about axis 36 to urge the crop onto the endless belts 18, 20, and 22 during a harvesting operation.

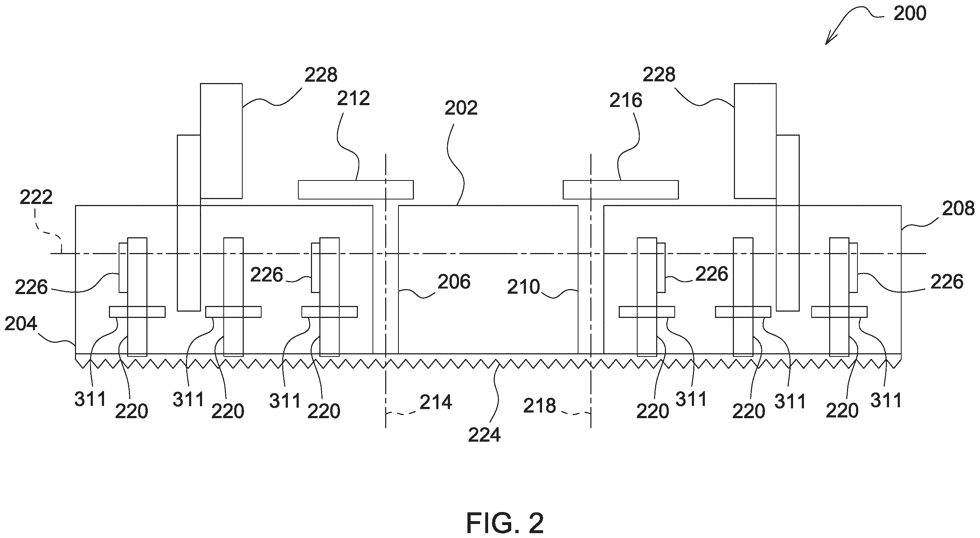

FIG. 2 is a partial schematic of an example draper header 200, which may be similar to draper header 4, discussed earlier. Similar to draper header 4, the draper header 200 includes a center section 202, a first wing section 204 pivotably connected to a first lateral side 206 of the center section 202, and a second wing section 208 pivotally connected to a second lateral side 210 of the center section 202. The first and second wing sections 204 and 208 are pivotable relative to the center section 202.

A first actuator 212 is connected to the first wing section 204 and operates pivot the first wing section 204 about a first pivot axis 214. A second actuator 216 is connected to the second wing section 208 and operates to pivot the second wing section 208 about a second pivot axis 218. Actuation of the first and second actuators 212 and 216 transfers a portion of the weight of the first wing section 204 and second wing section 208, respectively, to the center section 202. In some implementations, one or both of the first and second actuators 212 and 216 are hydraulic cylinders. In other implementations, other types of actuators are used, such as electrical actuators.

Each of the first and second wing sections 204 and 208 include a plurality of float arms 220. Although three float arms 220 are shown provided on each of the wing sections 204 and 208, in other implementations, a wing section may include additional or fewer float arms. The float arms 220 are pivotably connected to the respective wing sections 204, 208 about an axis 222. The draper header 200 also includes a cutter bar 224 extending along a width of the draper header 200. The float arms 220 support portions of the cutter bar 224 that extends along the first and second wing sections 204 and 208.

The float arms 220 are movable between a locked configuration in which the cutter bar 224 is held in a rigid or inflexible configuration and an unlocked configuration in which the cutter bar 224 is placed in a flexible configuration. The draper header 200 also includes a plurality of actuators 226. Each actuator 226 is associated with a corresponding float arm 220. In the illustrated example, each float arm 220 has a corresponding actuator 226. In other implementations, some float arms 220 do not have an associated actuator 226. That is, in some implementations, one actuator 226 is operable to move more than one float arm 220. In some implementations, the actuators 226 are hydraulic cylinders. In other implementations, the actuators 226 are other types of actuators, e.g., electric actuators, linear actuators, or rotary actuators.

The draper header 200 also includes gauge wheels 228. The gauge wheels 228 are selectively movable between an extended configuration in which the gauge wheels 228 are placed in contact with the ground and a retracted configuration in which the gauge wheels 228 are displaced away from the ground, thereby precluding contact between the ground and the gauge wheels 228. In the extended configuration, the gauge wheels 228 can raise the cutter bar 224 above the ground. Further, generally, with the gauge wheels 228 in the extended configuration, the cutter bar 224 is placed in a rigid configuration such that the cutter bar 224 is prevented from flexing to conform to a surface topography. When the gauge wheels 228 are placed in the retracted configuration, the cutter bar 224 is moved in close proximity to the ground, and, in combination, the cutter bar 224 is generally also placed in a flexible configuration. As a result, with the gauge wheels 228 retracted, the header is generally moved in close proximity to the ground with the cutter bar 224 in the flexible configuration so that the cutter bar 224 follows the contours of the ground. In the flexible configuration, the float arms 220 can contact the ground, thereby transferring a portion of the weight of the associated wing sections 204 and 208 to the ground.

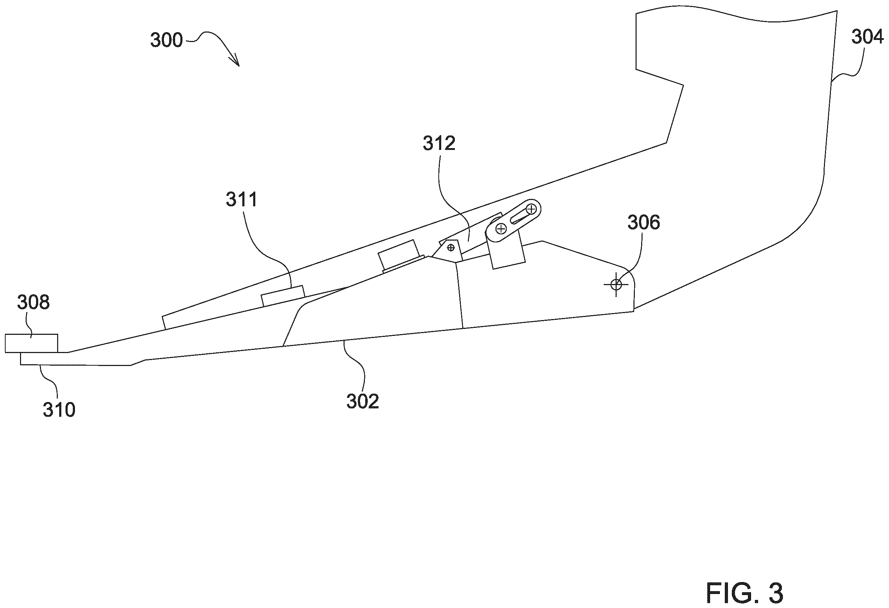

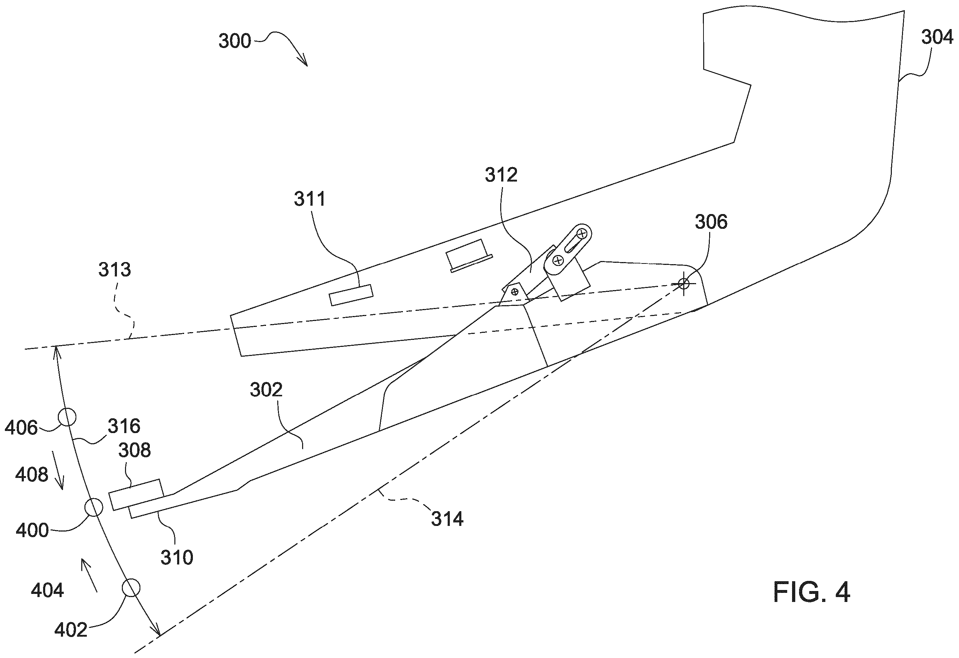

FIGs. 3 and 4 are a side views of a portion of an example draper header 300. As shown in FIGs. 3 and 4, the draper header 300 includes a float arm 302, similar to float arm 220, pivotably coupled to a wing frame portion 304 of the draper header 300. The float arm 302 is pivotable about an axis 306. A cutter bar 308, similar to cutter bar 224, is coupled to and supported at a distal end 310 of the float arm 302.

An actuator 312, similar to actuator 226, extends between the wing frame portion 304 and the float arm 302. The actuator 308 operates to move the float arm 302 between a locked configuration (shown in FIG. 3) and an unlocked configuration (shown in FIG. 4). In some implementations, in the locked configuration, the float arm 302 engages a stop 311 formed on or attached to the frame portion 304. In the unlocked configuration, the float arm 302 ceases to engage the stop 311. The float arm 302 is pivotable about the axis 306 over an angle range 316 between a first limit position 313 and a second limit position 314. A position of the float arm 302 along the angular range 316 is controlled by actuation of the actuator 226. For example, in some implementations, full extension of the actuator 226 moves the float arm 302 into the first limit position 313, shown in FIG. 3. At the first limit position 313, the float arm 302 is in a locked configuration. At any other position along the angular range 316 other than the first limit position 313, the float arm 302 is in an unlocked configuration. As a force applied to the actuator 226 is altered (e.g., a hydraulic force in the case of a hydraulic actuator) or an amount of power applied to the actuator 226 is altered (e.g., electrical power in the case of an electrical actuator), an amount by which the actuator 226 extends (i.e., moves away from the first limit position 313 along the angular range 316) can be increased. As a result, a position of the float arm along the angular range 316 is controlled. For example, in the context of a hydraulic actuator 312, a pressure of a pressurized fluid used to place the float arm 302 into the unlocked configuration may be selected to place the float arm 302 at a selected position along the angular range 316. This selected pressure of the pressurized fluid can be used to bias the float arm 302 away from the second limit position 314. A position of the float arm 302 along the angular range may change as the float arm 302 engages with the ground during an operation, such as a harvesting operation. However, a force applied to the float arm 302, such as the force applied by the actuator 312, controls a selected location along the angular range 316 occupied by the float arm 302 in a state where the float arm 302 is not being acted upon by forces from the ground. Rather, the float arm 302 is being acted upon by a force applied by the actuator 226 and gravity, which operate to place the float arm 302 at the selected location.

As mentioned earlier, each wing section of a header (e.g., wing sections 204 and 208) includes a plurality of float arms, e.g., float arms 220 or 302. By controlling an amount of extension of the actuators 226 and, hence, a position of the float arms 302 along the angular range 316, an amount of weight of the wing of a header transmitted to the ground can be controlled. For example, controlling a position of the float arms in this way functions to control a float balance between the wing sections and the float arms to allow the wing frames and float arms to follow a contour of the ground while reducing or eliminating the risk of pushing. In this way, the float arms follow the contours of the ground while controlling an amount of weight of the float arms and the cutter bar that is transferred to the ground and an amount of weight of the float arms and the cutter bar that is carried by wing section.

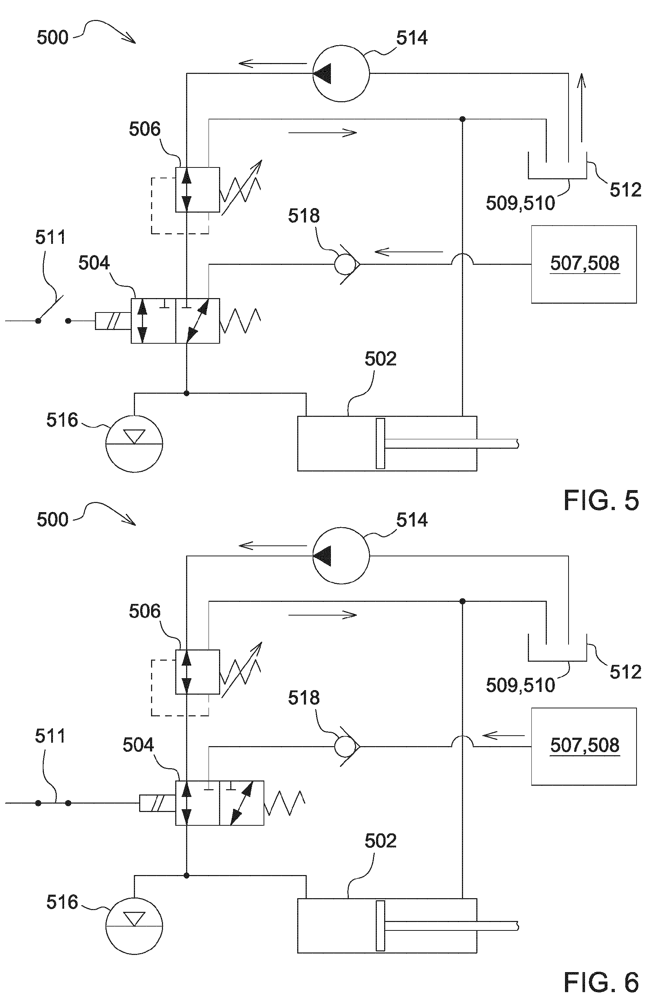

FIGs. 5 and 6 show a schematic of an example hydraulic circuit 500 for controlling extension and retraction of hydraulic actuator 502. Thus, the hydraulic circuit 500 is operable to control movement of a float arm between a locked configuration and an unlocked configuration, as described earlier. FIG. 5 shows the hydraulic circuit 500 configured such that the hydraulic actuator 502 in a locked configuration, and FIG. 6 shows the hydraulic circuit 500 configured such that the hydraulic actuator 502 is in an unlocked configuration.

In the illustrated example of FIGs. 5 and 6, the hydraulic actuator 502 is a hydraulic linear actuator, such as a hydraulic cylinder. In other implementations, other types of actuators can be used, such as a rotary actuator. Further, although a single hydraulic actuator 502 is shown, in other implementations, the hydraulic circuit 500 may include a plurality of hydraulic actuators 502, and, in such instances, the hydraulic circuit 500 is operable to control extension and retraction of the plurality of hydraulic actuators 502. In the illustrated example, the hydraulic actuator 502 is a hydraulic cylinder that is operable to extend or retract in response to applied fluid pressure.

The hydraulic actuator 502 may be similar to the actuators 226 and 312. The hydraulic actuator 502 is coupled at a first end to a portion of a wing frame of a header, such as wing frame 304, and at a second end to the float arm. In the illustrated example, full extension (or a selected amount of extension) of the hydraulic actuator 502 moves the float arm into the locked configuration, and less than full extension (or less than the selected amount of extension) of the hydraulic actuator 502 moves the float arm into the unlocked configuration. A pressure applied to the hydraulic actuator 502 controls a position of the float arm along an angular range, such as the angular range 316 described above. For example, the pressure applied to the hydraulic actuator 502 counteracts a weight carried by the float arm and is selected to define a position of the float arm along the angular range, such as the angular range 316 shown in FIG. 4.

Referring to FIG. 5, the hydraulic circuit 500 also includes a first valve 504 (e.g., a two-position, solenoid-operated valve) and a second valve 506. The first valve 504 encompasses any valve operable to alter a source of pressure applied to the hydraulic actuator 502. While the first valve 504 encompasses many valve types, the present disclosure is described in the context of the two-position, solenoid-operated valve. In some implementations, the second valve 506 is a pressure relief valve operable to maintain pressure in a portion of the hydraulic circuit 500 at a selected pressure and, if the hydraulic pressure exceeds the selected pressure, to vent or release hydraulic pressure from the hydraulic circuit 500. Thus, the present disclosure encompasses any valve operable to control pressure in a hydraulic circuit.

The hydraulic circuit 500 also includes a first pressurized fluid 507 from a first source of pressurized fluid 508 and a second pressurized fluid 509 from a second source of pressurized fluid 510. A pressure of the first pressurized fluid 507 is different than a pressure of the second pressurized fluid 509. Particularly, in the illustrated example of FIGs. 5 and 6, the first pressurized fluid 507 has a pressure that is greater than a pressure of the second pressurized fluid 509. In some implementations, one or both of the first pressurized fluid 507 and the second pressurized fluid 509 is a hydraulic liquid, such as an oil or another type of hydraulic fluid.

In the illustrated example, the second source of pressurized fluid 510 is provided in a fluid repository, such as sump 512, and is pressurized by a pump 514. However, in other implementations, the sump 512 and the pump 514 may be omitted, and the second source of pressurized fluid 510 is agnostic of these components. That is, in other implementations, the pump 514 and sump 512 are omitted and the hydraulic circuit 500 is merely in communication with the second source of pressurized fluid 510.

The hydraulic circuit 500 also includes an accumulator 516. The accumulator 516 accommodates for fluid pressures exceeding a selected value transmitted through hydraulic fluid from the actuator 502 and to aid in accommodating thermal expansion and thermal contraction. In some implementations, the accumulator 516 is omitted. The hydraulic circuit 500 also include a one way or check valve 518 to prevent backflow of the first pressurized fluid 507. In some implementations, another check valve may be included to prevent backflow of the second pressurized fluid 509. In still other implementations, one or both of the check valves may be omitted.

The hydraulic circuit 500 also includes a switch 511 operable to actuate the first valve 504. For example, the switch 511 is operable selectively to provide electrical power to the first valve 504, thereby moving the first valve 504 between a first or default position in which the first pressurized fluid 507 is permitted to pass and the second pressurized fluid 509 is prevented from passing, and a second position in which the first pressurized fluid 507 is prevented from passing and the second pressurized fluid 509 is permitted to pass. As shown in FIGs. 5 and 6, when the switch 511 is in an open condition, the first valve 504 is in the default position, and, when the switch 511 is in a closed condition, the first valve 504 is in the second position.

In other implementations, the hydraulic circuit 500 may be arranged such that, when the switch 511 is in the closed condition, first valve 504 allows first pressurized fluid 507 to pass and the second pressurized fluid 509 not to pass, and, when the switch 511 is in the open condition, the first pressurized fluid 507 is not permitted to pass and the second pressurized fluid 509 is permitted to pass. In still other implementations, the first valve 504 may have a different configuration to provide a similar functional capability. Thus, the hydraulic circuit 500 shown in FIGs. 5 and 6 is merely one nonlimiting example, and, thus, the scope of the present disclosure is not so limited.

As shown in FIG. 5, the first valve 504 is in the default position. In the illustrated example, the default position of the first valve 504 is an unactuated position. That is, the default position of the first valve 504 is one in which no electrical power is provided to a solenoid of the first valve 504. In the default position, the first valve 504 conducts the first pressurized fluid to the hydraulic actuator 502, which causes the hydraulic actuator 502 to extend and, thus, places the float arm into the locked configuration. Also, with the first valve 504 in the default position, the second pressurized fluid 509 is prevented from passing through the first valve 504.

Closure of the switch 511 energizes the solenoid of the first valve 504, causing the first valve 504 to move to the second position. As explained above, in the second position, the first valve 504 prevents passage of the first pressurized fluid 507 and permits passage of the second pressurized fluid 509. Because the first pressurized fluid 507 has a pressure that is greater than the pressure of the second pressurized fluid 509, in the second position, the pressurized fluid from the hydraulic actuator 502 (having a pressure corresponding to the first pressurized fluid 507) passes through the first valve 504 and to the second valve 506. Again, the second valve 506 is pressure relief valve that is configured to vent excess pressure above a selected pressure. For example, in some implementations, a fluid pressure at which the second valve 506 is configured to vent is a pressure less than the pressure of the first pressurized fluid 507 but greater than a pressure of the second pressurized fluid 509. Thus, in the second position, the second valve 506 vents the pressure of the pressurized fluid that exceeds the selected pressure. In the illustrated example, the vented fluid is conducted to the sump 512. In other implementations, the vented fluid is conducted to another location. When the excess pressure above the selected pressure is vented, the second valve 506 ceases venting, and the second pressurized fluid 509 or the pressure therefrom passes through the second valve 506, and, because the pressure of the second pressurized fluid 509 is less than the selected pressure at which the second valve opens to vent, the second pressurized fluid 509 passes through the second valve 506 and to and through the first valve 504 and to the hydraulic actuator 502.

As the pressure from the first pressurized fluid 507 is vented by the second valve 506, the actuator 502 retracts. Consequently, the float arm coupled to the hydraulic actuator 502 moves from the locked configuration to the unlocked configuration. However, once the excess pressure is vented by the second valve 506, the second pressurized fluid 509 or the hydraulic pressure of the second pressurized fluid 509 is transmitted through the first and second valves 504 and 506 and pressurizes the hydraulic actuator 502. As a result, the second pressurized fluid 509 maintains a position of the float arm at a selected location. For example, referring to FIG. 4, the float arm is maintained at a selected location such as a location along an angular range similar to the angular range 316. Further, the pressure applied to the hydraulic actuator 502 by the second pressurized fluid 509 prevents the float arm from moving to a second limit position of the angular range, similar to the second limit position 314 shown in Fig. 4. Thus, with the first valve 504 in the second position, the float arm is maintained at a select position in the unlocked configuration. By selecting the pressure of the second pressurized fluid 509 in this way, an amount of weight of the float arms transferred to the associated wing section is controlled.

Therefore, the hydraulic circuit 500 is operable to move float arms between a locked configuration and an unlocked configuration and to hold the float arms at a selected position in a range of positions in the unlocked configuration. Thus, the hydraulic circuit 500 is able to maintain the float arms at a selected position in the unlocked configuration and, consequently, transfer a portion of the weight of the float arms (and associated components attached thereto, e.g., a portion of the weight of a cutter bar) to a wing section of a header to which the float arms are attached. Therefore, the hydraulic circuit 500 provides operability for a header to avoid undesirable engagement with the ground and pushing, as described earlier, and, hence, damage to the header and the ground.

Although the example hydraulic circuit 500 shows the hydraulic actuator 502 in a fully extended position to place the float arm into a locked configuration, the scope of the disclosure is not so limited. For example, in other implementations, the hydraulic actuator 502 is arranged (for example, arranged between a portion of a wing frame and a float arm) such that full retraction (or a selected amount of retraction) of the hydraulic actuator 502 places the float arm in the locked configuration and less than full retraction (or less than the selected amount of retraction) of the hydraulic actuator 502 places the float arm in the unlocked configuration.

With continued reference to FIGs. 5 and 6, in some implementations, operation of the switch 511 to alter actuation of the hydraulic actuator 502 is combined with operation of one or more gauge wheels, which may be similar to gauge wheels 228. Referring to FIG. 5, with the switch 511 in the open condition, the switch 511 operates to move the one or more gauge wheels into the extended configuration. Therefore, with the switch 511 in the open condition, the header is configured with a cutter bar in a rigid configuration with the gauge wheels extended. With the switch 511 in the closed condition, as shown in FIG. 6, the switch 511 operates to move the one or more gauge wheels into the retracted configuration. Thus, with the switch 511 in the closed configuration, the header is configured such that the gauge wheels are retracted, and the cutter bar is in the flexible configuration.

In other implementations, the switch 511 in a closed condition operates to extend the one or more gauge wheels and place the cutter bar into the rigid configuration. Further, in other implementations, the switch 511 in an open condition operates to retract the one or more gauge wheels and place the cutter bar in the flexible configuration. In other implementations, the switch 511 is replaced by or is controlled by an electronic controller, such as the electronic controller 702, described in more detail below. The electronic controller may receive input from a user to control a position of the first valve 504 and, hence, a position of the float arm. The electronic controller may utilize input from other sources, such as one or more sensors.

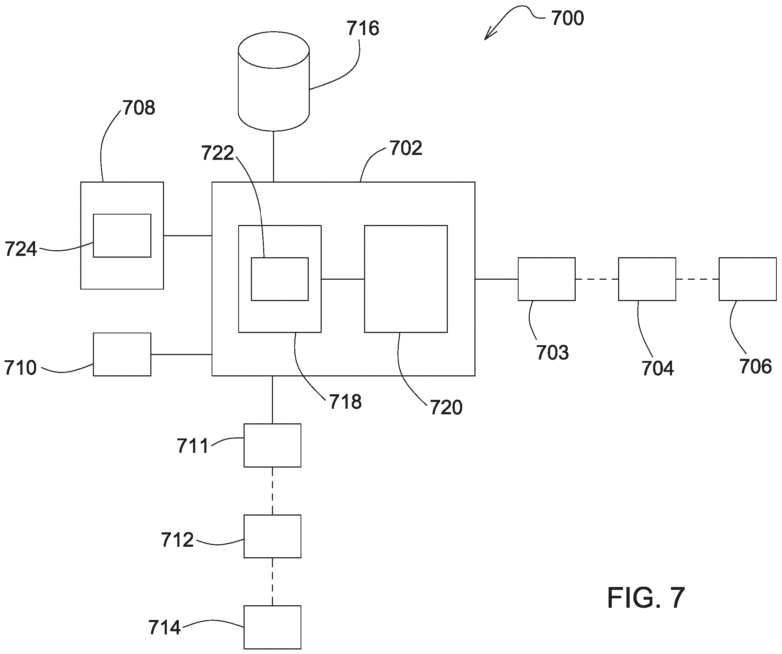

FIG. 7 is a schematic view of an example electronic control system 700 operable to control a position of the float arms (such as float arms 220 and 302) of a header (such headers 4, 200, and 300). The control system 700 includes the electronic controller 702, which, in some implementations, is in the form of a computer or computer system, such as computer 1502 or computer system 1500, discussed in more detail below. The control system 700 also includes one or more valve 703, a first actuator 704 operably connected to the one or first valves 703, and a float arm 706 moveable in response to the first actuator 704. The control system 700 also includes a display 708 and an input device 710. The one or more first valves 703 include, for example, the first valve 504 as well as other valves described in the context of the various examples provided herein or otherwise encompassed within the scope of the present disclosure. In some instances, operation of the one or more first valves 703, such as one or more hydraulic valves, results in actuation of first actuator 704 and, as a result, movement of the float arm 706. For example, the one or more first valves 703 may operate alone or in combination with each other to cause the first actuator 704 to actuate. In some implementations, the control system 700 also includes one or more second valves 711, a second actuator 712 operably connected to the one or more second valves 711, and a gauge wheel 714 moveable in response to the second actuator 712. In some instances, operation of the one or more second valves 711, such as one or more hydraulic valves, results in actuation of second actuator 712 and, as a result, actuation of the gauge wheel 714. For example, the one or more second valves 711 may operate alone or in combination with each other to cause the second actuator 712 to actuate. In some implementations, the second actuator 712 is a linear actuator, such as a hydraulic linear actuator (e.g., a hydraulic cylinder) or an electronic linear actuator. Other types of actuators may also be used. Although a single first actuator 704 and a single float arm 706 are illustrated, in other implementations, more than one first actuator 704, more than one float arm 706, or both may be included. The electronic controller 700 is operable to control operation of the components connected thereto. Particularly, the electronic controller 702 is operable to control actuation of the first actuator 704 to control movement of the float arm 706. In some instances, the electronic controller 702 is operable to control actuation of the first actuator 704 and the second actuator 712 to control movement of the float arm 706 and the gauge wheel 714, respectively. In some implementations, operation of the first actuator 704 is made automatically in response to operation of the second actuator 712. The dashed line between the one or more first valve 703 and the first actuator 704, the dashed line between the first actuator 704 and the float arm 706, the dashed line between the one or more second valves 711 and the second actuator 712, and the dashed line between the second actuator 712 and the gauge wheel 714 represents a physical coupling respectively therebetween. In some implementations, the input to the control system 700 is an input provided by a user, such as an operator of an agricultural machine connected to the header. In some implementations, the user input is made using the input device 710. In other implementations, the input is provided automatically, such as by a computer or other device in communication with the control system 700. In still other implementations, the electronic controller 702 is operable to provide a control signal automatically to operate the first actuator 704, the second actuator 712, or both. Although a single second actuator 712 and a single gauge wheel 714 are illustrated, in other implementations, more than one second actuator 712, more than one gauge wheel 714, or both are used.

The control system 700 may also include or be communicably coupled to a database 716. In some implementations, the database 716 is a remote database, which may be in the form of cloud storage, a remote server, or some other type of electronic storage configured to store information, such as positional information related to actuation of the first and second actuators 704 and 712 and movement of the float arm 706 and the gauge wheel 714.

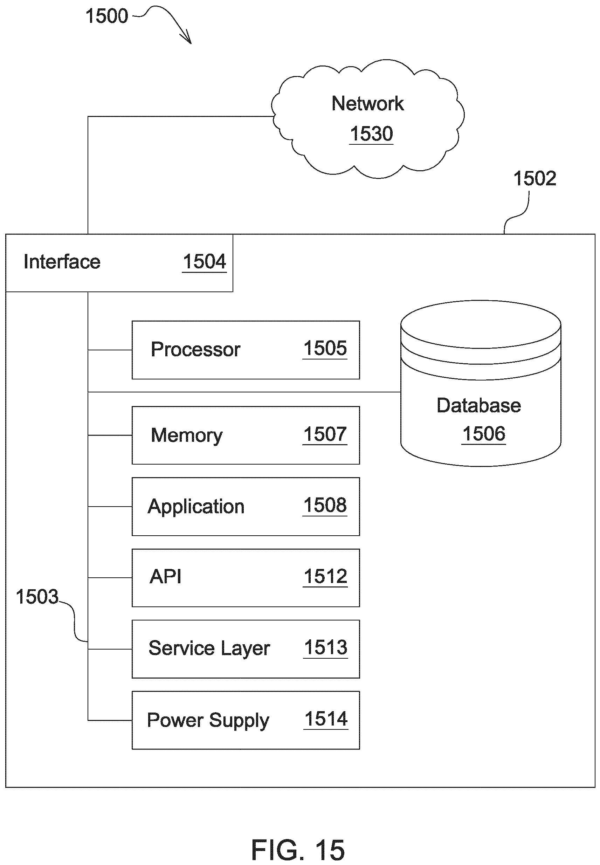

In some implementations, the electronic controller 702 is an electronic computer, such as computer 902 described in more detail below. The electronic controller 702 includes a processor 718 and a memory 720 communicably coupled to the processor 718. Additional details of the electronic controller 702, such as processor 718 and memory 720, are described below in the context of computer 902. In some implementations, the electronic controller 702 is communicably coupled with a network, such as in a manner described in more detail below in the context of FIG. 15.

The memory 720 communicates with the processor 718 and is used to store programs and other software, information, and data. The processor 718 is operable to execute programs and software and receive information from and send information to the memory 720. Although a single memory 720 and a single processor 718 are illustrated, in other implementations, a plurality of memories, processors, or both may be used. Although the processor 718 and the memory 720 are shown as being local components of the electronic controller 702, in other implementations, one or both of the processor 718 and memory 720 may be located remotely. The various components of the control system 700 are communicably coupled to the controller 702, such as via a wired or wireless connection.

Software 722, such as in the form of an application or program, is executed by the processor 718 to control operation of the control system 700, as described herein. Particularly, the software 722 includes executable instructions operable to control operation of one or more of the various components coupled to the controller 702 and, as a result, control one or more of operation of the first actuator 702, the second actuator 712, the display 708, the input device 710, and the database 716. For example, the software 722 is operable to control operation of the one more first valves 703 to control actuation of the first actuator 704, which, in turn causes movement of the float arm 706. Similarly, the software 722 is operable to control operation of the one or more second valves 711 to control actuation of the second actuator 712. Actuation of the second actuator 712, in turn, causes operation of the gauge wheel 714. For example, the software 722 includes instructions to cause the processor 718 to perform example method 800, described in more detail below.

Example input devices 710 include a keyboard, keypad, one or more buttons, a slider bar, a dial, a knob, a mouse, a joystick, or wheel. The input device 710 is used to receive input, such as from a user (such as an operator of an agricultural machine connected to a header that includes the first actuator 704 and the second actuator 712). For example, in some implementations, the display 710 displays information, such as information related to the operation of control system 700. For example, information displayed by the display 708 may include an operation status (e.g., position) of the first actuator 704, the second actuator 712, or both. Consequently, the display 708 may include a positional status (e.g., position) of the float arm 706, the gauge wheel 714, or both. In some instances, the information displayed by the display 708 is displayed via a graphical user interface (GUI) 724. In some implementations, the GUI 724 is operable to display aspects of the operation of the control system 700, including, for example, operation of the first actuator, the second actuator, or both. In some implementations, other aspects of the operation of the control system 700 may also include other types of information, such as a position of a float arm, such as a position of a float arm 706, such as a position along an angular range, such as angular range 316. Other types of information may also be displayed, such as other information related to an agricultural header or other aspects of a combine harvester. Example displays include cathode ray tubes (CRT), liquid crystal displays (LCDs), plasma displays, projection systems (e.g., an image projector), and heads up displays. Other types of displays are also within the scope of the present disclosure. In some implementations, the display 708 is a touch screen that is operable to receive input from a user via a user's touch. In some implementations in which the display 708 is a touch screen, the input device 710 may be omitted.

The example control system 700 may be used to control operations of the various hydraulic circuits described herein and within the scope of the present disclosure. Other control systems may also be used. Further, in some implementations, the control system 700 is operable to receive information and data from the various components of a hydraulic circuit, such as data or information from a fluid pressure sensor, and control operation of the various valves of the hydraulic circuit using, for example, the data or information received from one or more components of the hydraulic circuit or other data or information, such as other information or data received by, generated by, or otherwise made available to the control system 700. Further, in some implementations, the software 722 may be modified to control the various components of a hydraulic circuit, such as those example hydraulic circuits described herein, including, in some instances, utilizing various types of data or information received from components of the hydraulic circuits or data or information otherwise provided to the control system 700.

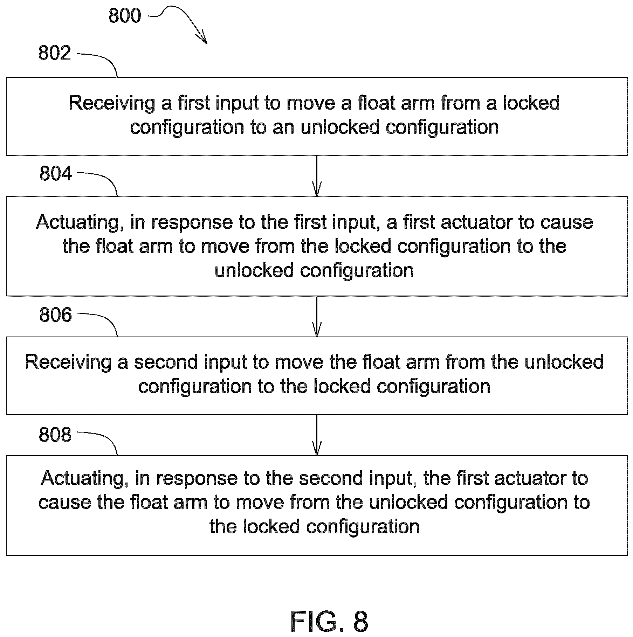

FIG. 8 flowchart of an example method 800 for moving a position of a float arm between a locked configuration and an unlocked configuration. At 802, a first input is received to move a float arm, such as float arm 220, 302, and 706, from the locked configuration to the unlocked configuration. In some implementations, the first input is received from an input device, such as input device 710 or a touch screen display. In other implementations, the first input is automatically generated by a computer, such as electronic controller 702 or another computer. In response to the received first input, at 804, a first actuator (e.g., first actuator 704) is actuated to cause the float arm to move from the locked configuration to the unlocked configuration. For example, the received first input may generate a signal that causes the movement of the float arm from the locked configuration to the unlocked configuration. In some implementations, the received first input causes a first valve (e.g., valve 504) to alter a position (e.g., move from a first position to a second position), which, in turn, causes actuation of the first actuator. For example, by altering a position of the first valve, passage of a first pressurized fluid through the first valve is ceased and a hydraulic pressure above a selected hydraulic pressure is vented, such as by operation of a second valve (e.g., valve 506), causing the first actuator to move and, correspondingly, causing the float arm to move from the locked configuration to the unlocked configuration. Further, alteration of the position of the first valve also allows a second pressurized fluid, which has a hydraulic pressure less than a hydraulic pressure of the first pressurized fluid, to pass through the first valve and the second valve and to the first actuator to maintain the float arm in a selected position in the unlocked configuration. Consequently, the second pressurized fluid maintains the first actuator and, as a result, the float arm at a selected position.

In some implementations, the received first input is an input to change a configuration of a gauge wheel, such as gauge wheel 228 or 714, between an extended configuration and a retracted configuration. For example, the received first input may generate a signal that causes movement of the gauge wheel between the extended configuration and the retracted configuration. For example, the received first input causes the gauge wheel to move from the extended configuration to the retracted configuration. In response to the received first input, a second actuator, such actuator 712, causes the gauge wheel to move to the retracted configuration from the extended configuration. Thus, the received first input is operable to cause (such as through the generation of one or more signals) both to move the gauge wheels into the retracted configuration and move the float arms into a selected position in the unlocked configuration.

At 806, a second input is received, such as from the input device, to move the float arm from the unlocked configuration to the locked configuration. Alternatively, the second input may be automatically generated. At 808, in response to the second input, the first actuator is actuated to cause the float arm to move from the unlocked configuration to the locked configuration. A signal may be generated in response to receipt of the second input to cause actuation of the first actuator. For example, the received second input may generate a signal that causes the first valve to return to the first position. In response, the second pressurized fluid is prevented from passing through the first valve, and the first pressurized fluid is permitted to pass through the first valve and to the first actuator. Consequently, the first actuator is actuated, causing the float arm to move from the unlocked configuration to the locked configuration.

In some implementations, the second received input is an input to change the configuration of the gauge wheel from the retracted configuration to the extended configuration. For example, the received second input may generate a signal that causes movement of the gauge wheel from the retraced configuration and the extended configuration. In response to the received second input, the second actuator causes the gauge wheel to move to the extended configuration from the retracted configuration. Thus, the received second input is operable to cause (such as through the generation of one or more signals) movement of the gauge wheels into the extended configuration and movement of the float arms into the locked configuration.

The method 800 is provided as an example and is not intended to be limiting. Thus, an order of the features of method 800 may be varied; one or more of the features of method 800 may be omitted; and one or more additional features may be added to method 800 and remain within the scope of the present disclosure. For example, in some instances, operation of one or more actuators may be electrically operated and, thus, operation of a valve to alter a flow of hydraulic fluid may be omitted.

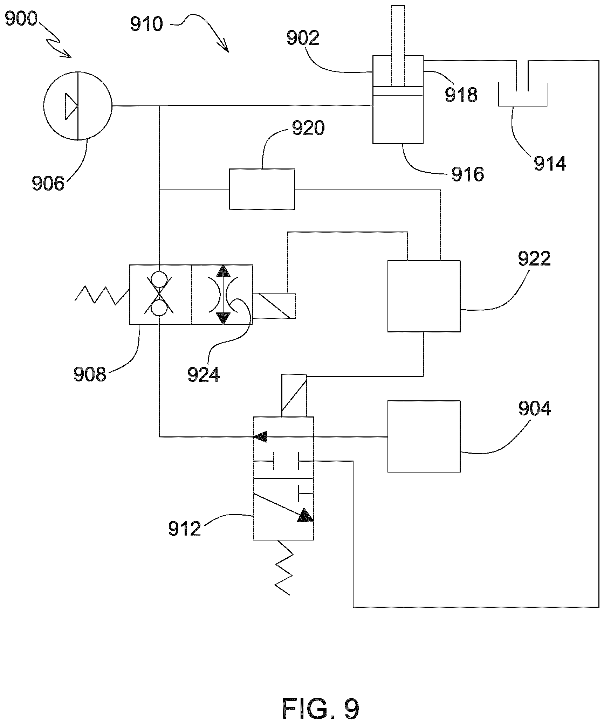

FIG 9 is a schematic view of another example hydraulic circuit 900 for controlling extension and retraction of hydraulic actuator 902. Thus, the hydraulic circuit 900 is operable to control movement of a float arm between a locked configuration and an unlocked configuration, as described earlier. The hydraulic actuator 902 may be similar to the actuators 226, 312, and 502. In the illustrated example, the hydraulic actuator 902 is a hydraulic linear actuator, such as a hydraulic cylinder. In other implementations, other types of actuators can be used, such as a rotary actuator. Further, although a single hydraulic actuator 902 is shown, in other implementations, the hydraulic circuit 900 may include a plurality of hydraulic actuators 902, and, in such instances, the hydraulic circuit 900 is operable to control extension and retraction of the plurality of hydraulic actuators 902.

In some implementations, the hydraulic actuator 902 is coupled at a first end to a portion of a wing frame of a header, such as wing frame 304, and at a second end to the float arm. In the illustrated example, full extension (or a selected amount of extension) of the hydraulic actuator 902 moves the float arm into the locked configuration, and less than full extension (or less than the selected amount of extension) of the hydraulic actuator 902 moves the float arm into the unlocked configuration. A pressure applied to the hydraulic actuator 902 controls a position of the float arm along an angular range, such as the angular range 316 described above. For example, the pressure applied to the hydraulic actuator 902 counteracts a weight carried by the float arm and is selected to define a position of the float arm along the angular range.

In addition to the hydraulic actuator 902, the hydraulic circuit 900 also includes a source of pressurized fluid 904, an accumulator 906, a first valve 912, and a second valve 908. The first valve 912 is located downstream of the source of source of pressurized fluid 904 and disposed upstream of the second valve 908. The second valve 908 controls flow of fluid to and from the hydraulic actuator 902 and the accumulator 906. The accumulator 906 may be similar to the accumulator 516, described earlier, and operates to accommodate for loads exceeding a selected value transmitted through hydraulic fluid from the hydraulic actuator 902 and to aid in accommodating thermal expansion. In some implementations, the fluid of the source of pressurized fluid 904 is a hydraulic liquid, such as an oil or another type of hydraulic fluid.

The hydraulic actuator 902 and the accumulator 906 are disposed at a location 910, which is a portion of the hydraulic circuit 900 that is downstream of the second valve 908 from the source of pressurized fluid 904. The hydraulic actuator 902, the accumulator 906, and the first valve are in fluid communication with each other. The second valve 908 is operable to control fluid flow to and from the hydraulic actuator 902 and the accumulator 906.

The first valve 912 is operable to control fluid flow from the source of pressurized fluid 904. In the illustrated example, the first valve 912 is a two-position valve that changeable between two configurations. In some implementations, the first valve 912 is a two-position, solenoid-operated valve. In other implementations, the first valve 912 can be other types of valves, such as a valve with more than two positions but otherwise is operable to provide the functionality described herein.

In the second position, the first valve 912 is configured to permit flow of the fluid from the source of pressurized fluid 904 to the second valve 908. In a first position, the first valve 912 is configured to prevent passage of fluid from the source of pressurized fluid to the second valve 908 and permits flow of fluid from within the hydraulic circuit 900 downstream of the source of pressurized fluid 904 to a sump 914 where fluid is collected. Thus, in the first position, fluid flow from the accumulator 906, the hydraulic actuator 902, or both that is permitted to flow from the location 910 through the second valve 908 (when in the second position), through the first valve 912, and to the sump 914. Also, while in the first position, the first valve 912 prevents passage of fluid from the source of pressurized fluid 904.

As shown in FIG. 9, fluid flow into the location 910 is directed to a piston side 916 of the hydraulic actuator 902. Thus, fluid passing the second valve 908 is directed, at least partially, into the piston side 916 of the hydraulic actuator 902, causing the hydraulic actuator 902 to extend. During extension, fluid is expelled from a rod side 918 of the hydraulic actuator 902. The expelled fluid is directed to sump 914. In other implementations, the expelled fluid may be directed to another location. Retraction of the hydraulic actuator 902 causes fluid to be expelled from the piston side 916 of the hydraulic actuator 902 and introduction of fluid into the rod side 918 of the hydraulic actuator 902. Fluid drawn into the rod side 918 of the hydraulic actuator 902 during retraction is pulled from the sump 914. In other implementations, the fluid pulled into the rod side 918 of the hydraulic actuator 902 may be drawn from another source. In some instances, retraction of the hydraulic actuator 902 is caused by the force of gravity, such as the force of gravity operating on lifted in response to extension of the hydraulic actuator 902. Thus, when hydraulic pressure present in location 910 of the hydraulic circuit 900 is released or reduced beyond a selected amount, the force of gravity causes retraction of the hydraulic actuator 902.

In some implementations, an amount of pressure in the location 910 of the hydraulic circuit 900 is controlled to provide a selected amount of retraction of the hydraulic actuator 902. In this way, one or more float arms actuated by the hydraulic actuator 902 is moved from a position corresponding to the locked configuration to one of a plurality of positions of the float arm corresponding to the unlocked configuration. Thus, as explained above, the one or more float arms may be placed in the unlocked configuration by being positioned at a location along an angular range, such as angular range 316, as described above. Fluid introduced into the location 910 by the second valve 908 is also introduced into or otherwise used to pressurize the accumulator 906.

The hydraulic circuit 900 also includes a fluid pressure sensor 920 provided at location 910. The fluid pressure sensor 920 senses a pressure of the fluid applied to the hydraulic actuator 902 and the accumulator 906. Sensor output from the fluid pressure sensor 920 can be used to control a location at which one or more float arms actuated by the hydraulic actuator 902 is positioned within a range of positions corresponding to the unlocked configuration, as described in more detail below. Additionally, in some implementations, the fluid pressure sensor 920 is used to control an amount of fluid pressure applied to the accumulator 906.

An electronic controller 922 is communicably connected to the second valve 908, the first valve 912, and the fluid pressure sensor 920. The electronic controller 920 is operable to control operation of the second valve 908 and the first valve 912 using, for example, one or more inputs, to control actuation of the hydraulic actuator 902. Control of the hydraulic actuator 902 in this way allows for control of movement of one or more float arms between the locked configuration and the unlocked configuration as well as positioning the one or more float arms at a selected position within range of positions within the unlocked configuration. In some implementations, the electronic controller 922 is in the form of a computer or computer system, such as computer 1502 or computer system 1500, discussed in more detail below. In some implementations, the electronic controller 922 is similar to electronic controller 702.

In the illustrated example, the second valve 908 is a two-position valve. In some implementations, the second valve 908 is a solenoid-operated, two-position valve. In other implementations, other types of valves are used. For example, in some implementations, a valve with more than two positions may be used but otherwise provides the operability described herein. In some implementations, the second valve 908 is configurable into a first position or a second position in response to a signal, such as an electronic signal from electronic controller 922. In the first position, the second valve 908 is closed. Thus, in the first position, the second valve 908 prevents fluid from passing into or out of the location 10. For example, in the first position, the second valve 908 prevents fluid from passing therethrough either into or from the location 910. Thus, in the first position, the location 910 is isolated from, for example, the source of pressurized fluid 904 and the sump 914.

In the second position, the second valve 908 is configured to permit flow of fluid into or out of the location 910. Thus, in the second position, the second valve 908 is opened and is configured to allow passage of fluid from the source pressurized fluid 904 to the accumulator 906 and the hydraulic actuator 902 as well as to permit flow of fluid out of the location 910 (e.g., out of the hydraulic actuator 902 and the accumulator 906) and into the sump 914. Additionally, in the second position, the second valve 908 includes or defines an orifice 924 that is operable to control a fluid flow rate through second valve 908. Thus, the orifice 924 controls a rate at which fluid flows into or out of the location 910. In some implementations, the orifice 924 is configured to control fluid flow within a range of five liters per min (L/min) (1.3 gallons per minute (gal/min) to 20 L/min (5.3 gal/min). This range is provided merely as an example. As such, the scope of the fluid flow through the second valve 908 via the orifice 924 is not so limited. In other implementations, the orifice 924 is configured to provide other fluid flow rates. By controlling a rate of fluid flow by the valve 910 in this way permits control of a rate at which the hydraulic actuator 902 is extended or retracted and, thus, a rate at which the float arm is moved along a range of movement, e.g., an angular range of movement, such as angular range 316. In this way, control of a position at which a float arm is to be placed, such as a position in the unlocked configuration, is improved. In other implementations, the orifice 924 is omitted.

In operation, to move one or more float arms into the locked configuration, the first valve 912 is moved into the second position to provide fluid communication from the source of pressurized fluid 904 to the second valve 908, and the second valve 908 is moved into the second position to permit flow of the fluid from the source of pressurized fluid 904 to the location 910 and, hence, to the hydraulic actuator 902 and the accumulator 906. The pressurized fluid is operable to charge the accumulator 906, such as to a specified pressure, and extend the hydraulic actuator 902 at a rate corresponding to the orifice 924. In some implementations, fluid flow from the source of pressurized fluid 904 is permitted to extend fully the hydraulic actuator 902, placing the one or more float arms into the locked configuration. In some implementations, configuring the first and second valves 912 and 908 as described is used to move the one or more float arms from one position along a range of movement to another position. Thus, in this way, the first and second valves 912 and 908 are used to change a position of the one or more float arms along a range of movement while maintaining the one or more float arms in the unlocked configuration, less than that corresponding to the locked configuration. To cease movement of the one or more float arms, the second valve 908 is moved to the first position, blocking fluid flow to or from the location 910 and, hence, to or from the hydraulic actuator 902 and accumulator 906. In some implementations, the first valve 912 may also be moved to the first position to prevent fluid flow from the source of pressurized fluid 904.

The electronic controller 922 may be similar to electronic controller 702 and may form part of a control system, such as control system 700. Thus, in some implementations, the electronic controller 922 is used to control operation of the various aspects of operation of the hydraulic circuit 900, including controlling operation of the second valve 908 and the first valve 912. Consequently, in some implementations, the one or more first valves 703, described above, includes the second valve 908 and the first valve 912. Further, in some implementations, the software 722 includes instructions to cause the processor 718 to perform example method 1000, described in more detail below, such as by controlling operation of the second valve 908 and the first valve 912.

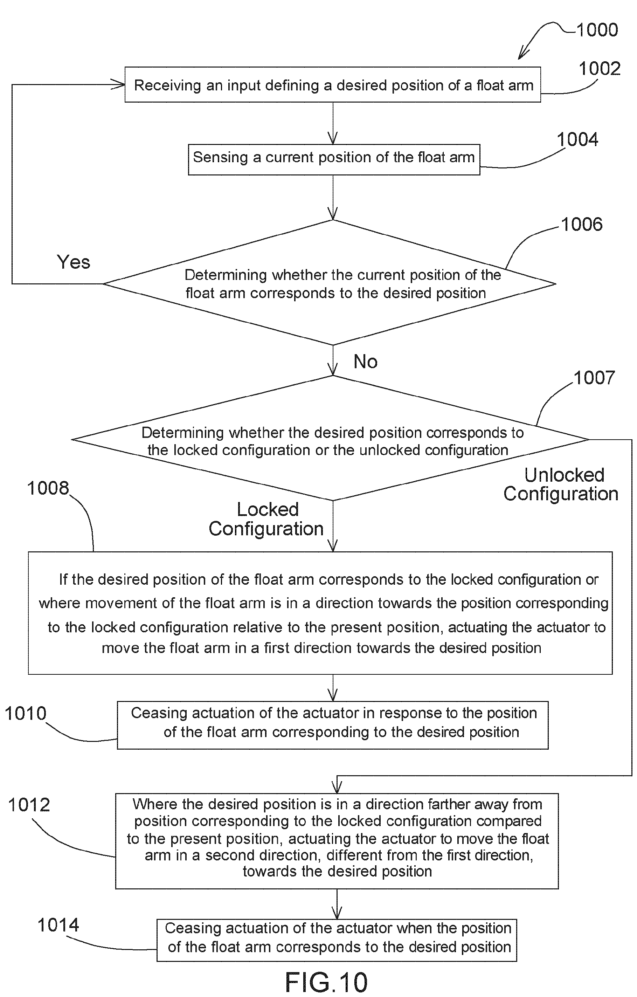

FIG. 10 is a flowchart of an example method 1000 for altering a position of a float arm between a locked configuration and an unlocked configuration. The example method 1000 is made in the context of hydraulic circuit 900. However, the scope of the method 1000 is not so limited and is applicable to other hydraulic circuits or actuator arrangements. Further, although a single actuator and a single float arm are described in the context of method 1000, the scope of the method 1000 is not so limited. Rather multiple actuators, multiple float arms, or both may be used.

At 1002, an input defining a desired position of a float arm is received. In some implementations, the input is received from a user. In other instances, the input is provided by an electronic controller, such as electronic controller 702 or 922. The electronic controller may be local or remotely located. At 1004, a current position of the float arm is sensed. In some implementations, the position of the float arm is determined by sensing a position of the float arm (e.g., with a position sensor), sensing a position of an actuator operable to alter a position of the float arm, such as hydraulic actuator 902, (e.g., with a position sensor), or a fluid pressure (e.g., with a fluid pressure sensor). In other implementations, the current position of the float arm is sensed in other ways. At 1006, a determination is made as to whether the float arm presently occupies the desired position. In some implementations, this determination is made by comparing the current position of the float arm with the desired position. In some implementations, an electronic controller, which may be similar to electronic controller 700, is used to perform the comparison. If the result of the comparison is that the current position of the float arm corresponds to the desired position, then the method 1000 returns to 1002. If the present position of the float arm is not the desired position, then the method 1000 moves to 1007, where another determination is made. At 1007, a determination is made as to whether the desired position is a position of the float arm corresponding to the locked configuration or a position of a plurality of positions corresponding to the unlocked configuration. If the desired position is the position corresponding to the locked configuration or if the desired position is a position towards (e.g., closer to) the position corresponding to the locked configuration relative to the present position, then the method moves to 1008. This latter situation is illustrated in the context of desired position 400 relative to the current position 402 shown in FIG. 4. If the current position corresponds to the locked configuration and the desired position is a position corresponding to the unlocked configuration or if the desired position is a position further away from the position corresponding to the locked configuration than the present position, then the method 1000 moves to 1012. This latter situation is illustrated in the context of the desired position 400 relative to the current position 406, as shown in FIG. 4.

As mentioned earlier, the angular range 316 represents a plurality of angular positions that the float arm 302 may occupy during operation. The first limit position 313 correspond to a position of the float arm 302 being in the locked configuration. Away from the limit position 313, the positions along the angular range 316 that can be occupied by the float arm 302, including the second limit position 314, represents the float arm 302 being in the unlocked configuration. With this example in mind, an example of a desired position of a float arm that is towards the position corresponding to the locked position relative to the present position of the float arm, as described above in context of 1008, is shown as desired position 400 in FIG. 4, with the present position 402 also shown in FIG. 4. In this context, a direction of movement of the float arm 302 from the present position 402 to the desired position 400 is in the direction of arrow 404, which is towards the first limit position 313, representing the locked configuration. In the context of 1012, if the desired position is a position farther away from the first limit position 313 compared to the present position, e.g., present position, then the float arm 302 moves in a direction towards the second limit position 314. For example, if the desired position is desired position 400 and the present position is position 406, then the float arm 302 is moved in the direction of arrow 408.

At 1008, the actuator is actuated to move the float arm in a first direction, e.g., in the direction of arrow 404 in FIG. 4, towards or into the locked configuration. With reference to FIG. 9, in some implementations, actuation of the actuator 902, is accomplished by moving the first valve 902 to the second position to provide fluid communication to the location 910. The first valve 912 is moved to the second position to permit fluid communication with the source of pressurized fluid 904. In some implementations, the second valve 908 and the first valve 912 are moved sequentially. In some implementations, the second valve 908 is moved first and the first valve 912 is moved second. In other implementations, the first valve 912 is moved before the second valve 908. In some implementations, the valves 908 and 912 are moved simultaneously. With both the second valve 908 and the first valve 912 in the respective second positions, fluid from the source of pressurized flows from the source of pressurized fluid 904 to the location 910. The fluid from the source of pressurized fluid 904 causes the hydraulic actuator 902 to actuate. In the illustrated example, actuation of the hydraulic actuator 902 in response to the fluid results in extension of the fluid causes the hydraulic actuator 902. In other implementations, actuation of the hydraulic actuator 902 in response to the fluid results in retraction of the hydraulic actuator 902.

The float arm is moved towards or into the locked configuration in response to actuation of the hydraulic actuator 902. In some implementations, movement of the hydraulic actuator 902 and, hence, the float arm continues until the position of the float arm is determined to correspond to the desired position. For example, the position of the float arm may be sensed using a position sensor that senses a position of the float arm, a position sensor that senses a position of the actuator (e.g., an amount of actuation of the actuator), or a fluid pressure of fluid used to actuator the hydraulic actuator 902. In some instances, fluid pressures may be correlated to positions of the float arm. Thus, when a fluid pressure is sensed, a position of the float arm is known or otherwise determinable based on the sensed fluid pressure. Fluid pressure may be sensed with a fluid pressure sensor, such as fluid pressure sensor 920. In this way, a position of the float arm corresponding to the locked position or another position within a range of positions corresponding to the unlocked configuration is determinable. Further, controlling a fluid pressure applied to the hydraulic actuator 902 controls an amount of force applied to the ground from the header.

At 1010, actuation of the actuator is ceased when the position of the float arm corresponds to the desired position. With reference to FIG. 9, actuation of the hydraulic actuator 902 is ceased by moving the second valve 908 to the first position. By configuring the second valve 908 in this way, fluid flow from the source of pressurized fluid 904 to the actuator 902 is ceased and hydraulic pressure at location 910 is maintained to maintain the actuator 902 at a desired configuration and, hence, the float arm at the desired position.

In some implementations, the hydraulic circuit, such as hydraulic circuit 900, includes an accumulator. In response to movement of the second valve 908 and the first valve 912 into their respective second position, the fluid from the source of pressurized fluid 904 causes the fluid pressure applied to the accumulator to increase or decrease, as the case may be.

The accumulator 906 and other accumulators described herein are operable to accommodate thermal expansion and an accompanying pressure change of the hydraulic fluid and accommodate for other changes to in pressure of the hydraulic fluid. For example, when a header experiences temperature changes, such as an increase or decrease in ambient temperature, a pressure of the hydraulic fluid changes. For example, an increase in ambient temperatures may cause the pressure of the hydraulic fluid to increase. Referring to location 910, if the second valve 908 is closed and the hydraulic actuator 902 is unable to extend or retract, the increase in hydraulic pressure in accommodated by the accumulator 906. Thus, increases or decreases in fluid pressure, such as when the header is not in use, can be accommodated, e.g., absorbed, by the accumulator 906. As a result, the accumulator avoids damage to a hydraulic circuit as a result of pressure changes due to temperature changes.

Accumulators described herein, such as the accumulator 906, also operate to absorb changes in hydraulic pressure as a result of use of the header. For example, during a harvesting operation, a position of the float arms is set, such as by manipulation of valves, as described herein. Operation of the valves in this way controls a pressure of the fluid applied to the hydraulic actuator, such as hydraulic actuator 906. As the float arms of the header engage the ground, such as during a harvesting operation, the float arms pivot about an axis, such as axis 306. This movement of the float arms causes articulation of the hydraulic actuator. Therefore, although a defined fluid pressure can be applied to the float arm by operation of one or more valves as described herein, movement of the float arms causes fluctuations in fluid pressure. These changes in fluid pressure are accommodated by the accumulator.

For example, with reference to the hydraulic circuit 900, the first and second valves 912 and 908 are operated by the controller 922 to cause a selected amount of hydraulic pressure to be applied to the hydraulic actuator 902. With the desired amount of hydraulic pressure applied to the hydraulic actuator 902, the second valve 908 is closed, i.e., placed in the first position. This maintains the pressure at location 910 at a constant level when forces acting on the float arm are static or balanced. However, during a harvesting operation, the float arms are in contact with and are moved along the ground. As a result, the float arms pivot about their respective axis in response to changes in topography. In response, the hydraulic actuator 902 is actuated. With the second valve 908 closed, this operation of the hydraulic actuator 902 results in changes in pressure at location 910. These pressure changes are accommodated by the accumulator 906. This behavior is also applicable to the other hydraulic actuators described herein.

When the position of the float arm is at a position corresponding to the locked configuration or when the desired position is further away from the position corresponding to the locked configuration compared to the present position, then, at 1012, the actuator is actuated in a second direction, e.g., the direction of arrow 408 in FIG. 4, to move the float arm out of the locked configuration and to a position of a plurality of positions corresponding to the unlocked configuration or from a position corresponding to the unlocked configuration to another position corresponding to the unlocked configuration further away from the position corresponding to the locked configuration.

In the context of the hydraulic circuit 900 of FIG. 9, moving the float arm out of the locked configuration to a position corresponding to the unlocked configuration or from one position of a plurality of positions corresponding to the unlocked configuration to another of the plurality of positions involves reducing a hydraulic pressure at the location 910. For example, to move the float arm in this way, the second valve 908 is moved to the second position to provide fluid communication to the location 910, and the first valve 912 is also moved to the second position to provide fluid communication from the location 910 to the sump 914. In some instances, the first valve 912 is moved before the second valve 908 is moved. In some instances, both the first and second valves 912 and 908 are moved together. In other implementations, the second valve 908 is moved before the first valve 912. By manipulating the valves 908 and 912 in this way, fluid from location 910 is diverted to the sump 914, thereby decreasing fluid pressure at the location 910. In response, the hydraulic actuator 902 retracts, and the float arm is moved away from the position corresponding to the locked configuration or from one position of the plurality of positions corresponding to the unlocked configuration to another position therein that is away from the position corresponding to the locked configuration.

At 1014, actuation of the actuator is ceased when the position of the float arm corresponds to the desired position. In some implementations, as mentioned above, a position of the float arm is determined using a position sensor to sense a position of the float arm, a position sensor to sense a position of the actuator, or a fluid pressure sensor (such as fluid pressure sensor 920) to sense a fluid pressure, such as a pressure of the fluid at the location 910. In response to the float arm reaching the desired position, the second valve 908 is moved to the first position to prevent flow of fluid from the location 910. In some implementations, the first valve 912 is moved to the first position as well, to cease flow of fluid to the sump 914.

The method 1000 is provided as an example and is not intended to be limiting. Thus, an order of the features of method 1000 may be varied; one or more of the features of method 1000 may be omitted; and one or more additional features may be added to method 1000 and remain within the scope of the present disclosure.

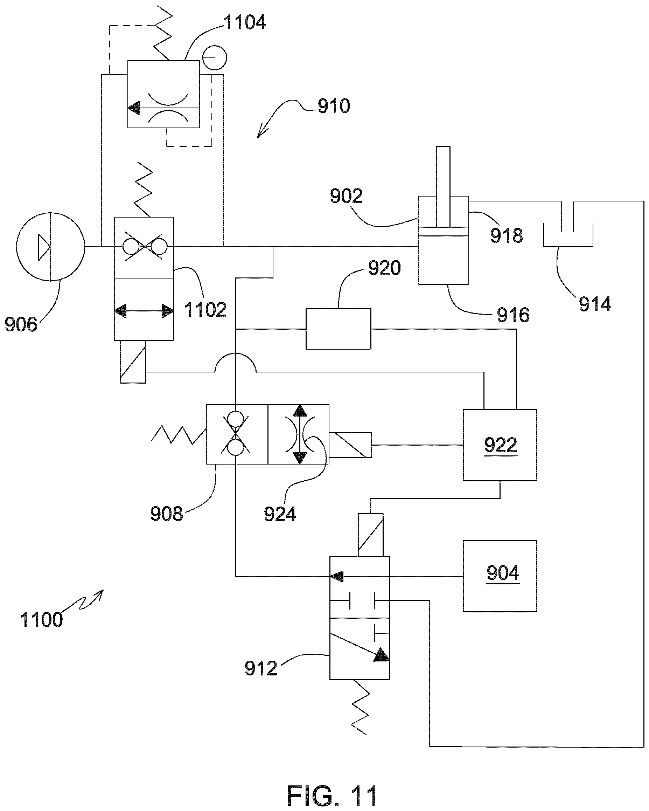

FIG. 11 is a schematic view of another hydraulic circuit 1100 that is similar to the hydraulic circuit 900 except that the hydraulic circuit 1000 includes a third valve 1102 operable to isolate selectively the accumulator 906 from the hydraulic actuator 902. The hydraulic circuit 1100 operates similarly to the hydraulic circuit 900, described earlier, except as described further here below. An explanation of features common to the hydraulic circuit 900 is omitted. Further, features common to hydraulic circuit 900 are identified with the same reference numbers.

The hydraulic circuit 1100 includes the third valve 1102 that is configured to isolate selectively the accumulator 906 from the hydraulic actuator 902. In a first position, the third valve 1102 prevents passage of fluid permitted to pass to location 910 by the second valve 908 to the accumulator 906. In a second position, the third valve 1102 permits passage of fluid to the accumulator 906 from location 910. By isolating the accumulator 906 with the third valve 1102 in this way when moving the float arm, such as into or towards the locked configuration or away from the locked configuration, the rate at which the float arm moves, e.g., to or away from the locked configuration, increases because fluid that may otherwise be directed to the accumulator 906 or fluid that may otherwise flow from the accumulator 906 is avoided. Thus, all fluid being directed to the location 910 and, hence, the hydraulic actuator 902 by the second valve 908, is used to actuator the hydraulic actuator 902. In this example, with the third valve 1102 in a first position, the third valve 1202 is closed, and all fluid passed by the second valve 908 to the location 910 is used to extend the hydraulic actuator 902 to place the one or more float arms in the locked configuration (or another position in a range of positions corresponding to the unlocked configuration). Similarly, all fluid flowing from the location 910 flows from the hydraulic actuator 902 and without fluid from the accumulator 906. As a result, the actuation of the hydraulic actuator 902 occurs more quickly.

As explained earlier, to direct all fluid to the hydraulic actuator 902 to move the one or more float arms into or towards the locked configuration, the second valve 908 is moved to the second position, and the first valve 912 is moved to the second position. With the first and second valves 912 and 908 configured in this way and with the third valve 1102 placed in the first position, the fluid from the source of pressurized fluid 904 passes through the first and second valves 912 and 908 and to the hydraulic actuator 902. Because the third valve 1102 is closed, fluid is prevented from passing to the accumulator 906. This results in a faster response and, consequently, a reduced response time associated moving the one or more float arms into or towards the float arm position associated with the locked configuration (e.g., the first limit position 313, described above with respect to FIG. 4). Thus, with the valves configured in this way, movement of the float arms occurs more quickly since no fluid is diverted to the accumulator. Similarly, with the third valve 1102 in the first position, the second valve 908 in the second position, and the first valve 912 in the first position, fluid drained from location 910 comes exclusively from the hydraulic actuator 902. Consequently, actuation of the hydraulic actuator 902 (and, hence, the float arm) occurs more rapidly because fluid flow from the accumulator 906 is avoided.

As shown in FIG. 11, the second valve 908 includes orifice 924. As explained above, the orifice 924 control a fluid flow rate through the second valve 908. However, in some implementations, the second valve 908 may omit the orifice 924. In such instances, without the orifice, the second valve 908 permits fluid flow into and out of the location 910 at an increased rate. As such, without the orifice 924, the second valve 908 permits an increased fluid flow from the hydraulic actuator 902 when the third valve 1102 is closed and from both the accumulator 906 and the hydraulic actuator 902 when the third valve 1102 is open. Similarly, without the orifice 924, fluid flow to the hydraulic actuator 902 is increased and further increased when the third valve 1102 is in the first position that prevents fluid passage to the accumulator 906.

With the third valve 1102 in the first position to isolate the accumulator 906 from hydraulic actuator 902 and with the second valve 908 in the second position and the first valve 912 in the second position, fluid is drained from the hydraulic actuator 902 and to the sump 914 more quickly. Further, isolating the accumulator 906 in this way also allows the accumulator 906 to remain pressurized by the hydraulic fluid even as fluid is drained from the location 910 and, consequently, a fluidic pressure at 910 at the hydraulic actuator 902 is decreased. By retaining the fluidic pressure of the accumulator 906 in this way, time to pressurize the accumulator 906 as fluid from the source of pressurized fluid 904 is introduced into the location 910 is avoided and actuation of the fluidic actuator 902 occurs more quickly. In comparison to the hydraulic circuit 900 (which lacks a third valve similar to third valve 1102), each time hydraulic fluid is introduced into the location 910 of hydraulic circuit 900 to actuate the hydraulic actuator 902, a portion of the fluid and associated fluidic pressure is used to pressurize the accumulator 906. Consequently, a rate at which the hydraulic actuator 902 of hydraulic circuit 900 is actuated by the fluid is decreased compared to the hydraulic circuit 1100. Therefore, in some implementations, actuation of the one or more float arms operated by the hydraulic actuator 902 occurs more quickly when the accumulator 906 is isolated by the third valve 1202.

With continued reference to FIG. 11, when a pressure change to the accumulator 906 is desired, the third valve 1102 is selectively actuated. For example, if an increase in an amount of fluid pressure applied to the accumulator 906 is desired, the second valve 908 is placed in the second position and the first valve 912 is placed in the second position to flow fluid from the source of pressurized fluid 904 to the location 910. With the third valve 1102 open, the fluid introduced into location 910 is applied to the accumulator 906 as well as to actuator the hydraulic actuator 902. In some instances, the pressure sensor 920 is used to monitor a fluid pressure applied to the accumulator 920. In some instances, when a desired fluid pressure is reached, the second valve 908 may be closed or the third valve 1102 may be closed to maintain the accumulator 906 at the desired pressure level.

As described above, the electronic controller 922 may be similar to electronic controller 702 and may form part of a control system, such as control system 700. In some implementations, the one or more first valves 703, described above, includes 908 and 912. The controller 922 includes software, such as software 722, that includes instructions to control operation the valves 908, 912, and 1102. Further, the software can utilize information, such as information from fluid pressure sensor 920, to control operation of one or more of the valves 908, 912, and 1102.

The electronic controller 922 is communicably coupled to the second valve 908, the first valve 912, the third valve 1102, and the fluid pressure sensor 920 and is used to control operation of the valves 908, 912, and 1102 based, for example, on one or more inputs. Example inputs may be a user input, an input provided by the fluid pressure sensor 902, or another input provided by, for example, the electronic controller 922, another sensor, or computer system, whether locally or remotely located. The electronic controller 902 controls operation of the valves 908, 912, and 1202 to control an amount of extension or retraction of the hydraulic actuator 902 (and, hence, a position of the one or more float arms along a range of movement thereof, such as angular range 316) and a fluid pressure in the location 910.

The hydraulic circuit 1100 also includes a bypass valve 1104. The bypass valve 1104 is arranged such that fluid pressure that exceeds a selected fluid pressure value causes the bypass valve 1104 to open and permit passage of fluid around the third valve 1102 and to the accumulator 906. For example, with the third valve 1102 closed, i.e., in the first position, an increase in fluid pressure at location 910, for example, resulting from an increase in fluid temperature, causes the bypass valve 1104 to open and permit fluid to flow to around the third valve 1102 and to the accumulator 906. In another example, increased fluid pressure may result from a load imparted to the one or more float arms. This load is transmitted to the hydraulic actuator 902 and may cause the hydraulic actuator 902 to become at least partially actuated (e.g., partially retracted). This change to the hydraulic actuator 902 caused by this loading increases pressure at location 910. If the second valve 908 is closed (e.g., in the first position) and the third valve 1102 is also closed (e.g., in the first position), if this increased pressure exceeds a selected pressure, the bypass valve 1104 opens and permits fluid flow to the accumulator 906. For example, during an agricultural operation, the float arms may encounter an input, such as from contact with the ground. The loading associated with that input may cause a displacement of one or more of the float arms, and that displacement is communicated to the hydraulic actuator 902, causing the hydraulic actuator 902 to actuate, at least temporarily. This actuation of the hydraulic actuator 902, e.g., retraction of the hydraulic actuator 902, may increase a fluid pressure in the location 910. If this increased fluid pressure exceeds a selected pressure, the bypass valve 1104 automatically opens to permit fluid flow from the location 910 to the accumulator 906. In some implementations, the bypass valve 1104 is omitted.

Again, the electronic controller 922 may be similar to electronic controller 702, and, in the context of hydraulic circuit 1100, the software 722 is operable to control operation of the second valve 908, first valve 912, and third valve 1102 to control, for example, operation of the hydraulic actuator 902. Consequently, the software 722 includes instructions to cause the processor 718 to perform the example method 1000, such as by controlling the second valve 908, first valve 912, and third valve 1102.

FIG. 10 is referenced again, this time in the context of the example hydraulic circuit 1100. The description of features 1002, 1004, 1006, and 1007, provided earlier, are applicable here and are not repeated. Although the features 1002, 1004, 1006, and 1007 are applicable here, additional details are provided which may be used in addition to or in place of one or more of the details described above in the context of 1002, 1004, 1006, and 1007. For example, for feature 1002, in some implementations, a desired position of the float arm (or float arms) is input by a user, such as via an input device. A desired position of the float arm may be received from a user (e.g., an operator of a combine harvester), a user at a remote location, from an electronic controller, or from another source. In some implementations, the electronic controller 922 receives the input for the desired position of the float arm.

At 1008, when actuating the actuator to move the float arm in a first direction, e.g., in the direction of arrow 404 in FIG. 4, towards the locked configuration, with reference to FIG. 11, the second valve 908 is moved to the second position, and the first valve 912 is moved to the second position. Placing valves 908 and 912 in this configuration directs fluid from the source of pressurized fluid 904 to the hydraulic actuator 902 to cause the hydraulic actuator 902 to actuate. Some of this fluid is also directed to the accumulator 906. Therefore, to make the actuator respond more quickly to introduction of the fluid, the third valve 1102 is moved to the first position, thereby blocking fluid flow to the accumulator 906. In this way, fluid directed to location 910 is not used to pressurize the accumulator, and all fluid pressure is applied to the hydraulic actuator 902, causing the hydraulic actuator 902 to respond more quickly. In some implementations, the third valve 1102 is placed in the second position, thereby allowing the pressurized fluid to pressurize the accumulator 906.

At 1010, actuation of the actuator is ceased when a position of the float arm corresponds to a desired position. Referring to FIG. 11, in some implementations, the third valve 1102 moves to the second position to provide fluid communication to the accumulator when the float arm has reached the desired position. In still other implementations, the second valve 908 and the third valve 1102 are operated in concert to control pressure applied to the first location 910, as shown in FIG. 11. For example, in some instances, moving the third valve 1102 to the second location may reduce the fluid pressure applied to hydraulic actuator 902 as the accumulator 906 is pressurized. As a result, a position of the float arm may be altered or a rate at which the float arms are made to move may be altered. To maintain the float arm at the desired position, moving the third valve 1102 to the second position may be coordinated with moving the second valve 908 to the second position to introduce additional fluid pressure to location 910 and, thus, maintain the float arm at the desired position as the accumulator 906 is pressurized. The second valve 908 is moved to the first position to cease fluid communication to the location 910 in response to the accumulator 906 being charged and the float arm maintained at the desired location.

At 1012, the third valve 1102 may also be operated to isolate the accumulator 906 to increase the responsiveness of the hydraulic actuator 902 to move the float arm to the desired position. By moving the third valve 1102 to the first position and moving the second valve 908 to the second position and the first valve 912 to the first position, fluid from hydraulic actuator 902, alone, is flowed to the sump 914. Because the accumulator 906 is isolated, fluid from the accumulator 906 is retained. Because addition fluid from the accumulator 906 is excluded from the conduit or conduits carrying the fluid to the sump 914, there is a reduced volume of fluid to be moved, and, consequently, the hydraulic actuator 902 is actuated more quickly. The float arm position is, accordingly, moved more quickly in response. As mentioned above, the orifice 924 may be omitted to further increase the fluid flow to the sump 914 and, thus, the responsiveness of the hydraulic actuator 902. In some implementations, the third valve 1102 is moved to the second position so that the pressure applied to the accumulator 906 is simultaneously reduced as the hydraulic actuator 902 is actuated to alter a position of the float arm.

At 1014, ceasing actuation of the actuator when the position of the float arm corresponds to the desired position may include coordinating movement of the different valves. Thus, when the float arm has reached the desired position, the second valve 908 is moved to the first position to cease fluid flow to the sump 914. Where the third valve 1102 is in the first position as fluid is drained from the actuator 902 to the sump 914, when the third valve 1102 is moved to the second position to provide fluid communication to the accumulator 906, the increase in fluid pressure applied to the actuator 902 may alter a position of the float arm. Consequently, in some implementations, movement of the third valve 1102 is coordinated with movement of the second valve 908 to maintain the float arm at the desired position. For example, moving the third valve 1102 to the second position allow fluid flow from the accumulator 906 to the hydraulic actuator 902. To offset this increased pressure applied to the actuator 902 from the accumulator 906, the second valve 908 is moved to the second position, thereby allowing fluid pressure applied to the actuator 902 to be reduced. The second valve 908 is then returned to the first position to maintain the float arm at the desired position or when the float arm has returned to the desired position or when a pressure applied to the hydraulic actuator 902 is maintained at a desired pressure corresponding to the desired position of the float arm.

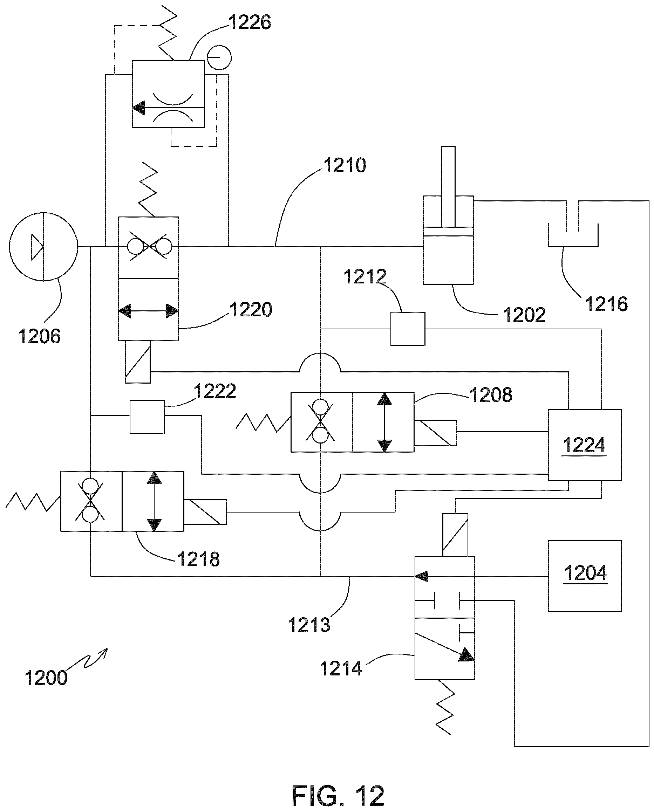

FIG. 12 is a schematic view of another hydraulic circuit 1200. The hydraulic circuit includes a hydraulic actuator 1202, a source of pressurized fluid 1204, a first valve 1214, a second valve 1208, and an accumulator 1206. In some implementations, the fluid of the source of pressurized fluid 1204 is a hydraulic liquid, such as an oil or another type of hydraulic fluid. The second valve 1208 is operable to control flow of fluid to or from the hydraulic actuator 1202. For example, the second valve 1208 is operable to control the flow of the fluid from the source of pressurized fluid 1204 to a location 1210. The location 1210 is in fluid communication with the hydraulic actuator 1202. In a first position, the second valve 1208 prevents passage of the fluid to or from the location 1210 and, hence, the hydraulic actuator 1202. In a second position, the second valve 1208 provides fluid communication with the location 1210 and the hydraulic actuator 1202, thereby allowing the fluid to flow thereto. Thus, the second valve 1208 is operable to provide selective fluid communication with the location 1210 and, consequently, the hydraulic actuator 1202. A fluid pressure sensor 1212 is also included at location 1210 and operates to sense a fluid pressure applied to the hydraulic actuator 1202.

A first valve 1214 is also included. The first valve 1214 is operable to control flow from the source of pressurized fluid 1204. In a first position, the first valve 1214 prevents fluid flow from the source of pressurized fluid 1204 and directs fluid from the hydraulic actuator 1204, the accumulator 1206, or both to a sump 1216. In a second position, the first valve 1214 prevents flow to the sump 1216 and permits flow of fluid from the source of pressurized fluid 1204 to the hydraulic actuator 1202, to the accumulator 1206, or both as described herein.

The hydraulic circuit 1200 also includes a third valve 1220 and a fourth valve 1218. A fluid pressure sensor 1222 is located between the third valve 1220 and the fourth valve 1218 to sense a fluid pressure being applied to the accumulator 1206. In a first position, the fourth valve 1218 prevents fluid flow to or from the accumulator 1206, and, in the second position, the fourth valve 1218 permits fluid flow to or from the accumulator 1206. The third valve 1220 is positioned between the hydraulic actuator 1202 and the location 1210 and, hence, the accumulator 1206. In a first position, the third valve 1220 is closed, preventing flow to or from the accumulator 1206. In a second position, the third valve 1220 is open, providing fluid communication between the accumulator 1206 and the hydraulic actuator 1202.

The hydraulic circuit 1200 also includes an electronic controller 1224 is communicably connected to the second valve 1208, the first valve 1214, the fourth valve 1218, the third valve 1220, the fluid pressure sensor 920, and the fluid pressure sensor 1222. The electronic controller 1224 may be similar to electronic controller 702 and may form part of a control system, such as control system 700. Thus, in some implementations, the electronic controller 1224 is used to control operation of the various aspects of operation of the hydraulic circuit 1200, including controlling operation of the valves 1208, 1214, 1218, and 1220. Consequently, in some implementations, the one or more first valves 703, described above, includes the valves 1208, 1214, 1218, and 1220. Further, in some implementations, the electronic controller 1224 includes software, such as software 722, that includes instructions to control operation of the valves 1208, 1214, 1218, and 1220 to control, for example, actuation of the hydraulic actuator 1202 and altering a pressure applied to the accumulator 1206. For example, the software may include instructions to cause the electronic controller 1224 to perform a method, such as method 1000.

The electronic controller 1224 is operable to control operation of the second valve 1208, the first valve 1214, the fourth valve 1218, the third valve 1220 using, for example, one or more inputs, to control actuation of the hydraulic actuator 1202. Example inputs may be a user input, an input provided by the fluid pressure sensor 1212, the fluid pressure sensor 1222, or another input provided by, for example, the electronic controller 1224, another sensor, or computer system, whether locally or remotely located. Control of the hydraulic actuator 1202 in this way allows for control of movement of one or more float arms between the locked configuration and the unlocked configuration as well as positioning the one or more float arms at a selected position within range of positions within the unlocked configuration. The electronic controller 1224 controls operation of the valves 1208, 1214, 1218, and 1220 to control an amount of extension or retraction of the hydraulic actuator 1202 (and, hence, a position of the one or more float arms along a range of movement thereof, such as angular range 316) and a fluid pressure in the location 1210. In some implementations, the electronic controller 1224 is in the form of a computer or computer system, such as computer 1502 or computer system 1500, discussed in more detail below. In some implementations, the electronic controller 1224 is similar to electronic controller 922 or 702.

The valves 1208, 1214, 1218, and 1220 omit an orifice, such as orifice 924, described earlier. In this way, fluid flow through the valves, when in an open condition, is not restricted thereby increasing fluid flow through the respective valves when compared to similar valves with an orifice. In some implementations, one or more of the valves may include an orifice.

With the second valve 1208 and the first valve 1214 in their respective second positions, fluid from the source of pressurized fluid is directed through a location 1213 downstream of the first valve 1214 and to the hydraulic actuator 1202. As a result, the hydraulic actuator 1202 is actuated. As shown, the hydraulic actuator 1202 extends as a result of the fluid flow to the hydraulic actuator 1202, resulting in movement of the float arms towards the locked configuration. By isolating the accumulator 1206, such as by moving the fourth valve 1218 and the third valve 1220 into their respective first positions, an entirety of the fluid flow from the source of pressurized fluid 1204 is directed to the hydraulic actuator 1202. As a result, movement of the float arms occurs more quickly. Thus, in this way, moving the float arms to a desired position is more responsive. Further, because the second valve 1208 and the first valves 1214 do not include an orifice, the rate of fluid flow respectively therethrough is not diminished due to an orifice and, consequently, the rate at which the float arms are moved is increased.

By moving one or both of the fourth valve 1218 and the third valve 1220 into an open position, such as by moving one or both to the second positions respectively, the rate at which the hydraulic actuator 1202 is actuated in response to both the first and second valves 1206 and 1214 being open to flow fluid from the source of pressurized fluid 1204 to the hydraulic actuator 1202 is reduced, because some of the hydraulic fluid is directed to the accumulator 1206. For example, in some implementations, the second valve 1208, the fourth valve 1218, and the third valve 1220 are moved into their respective second positions to allow fluid flow therethrough. In this condition, the transmitted pressurized fluid acts both on the hydraulic actuator 1202 to extend the hydraulic actuator 1202 as well as to pressurize the accumulator 1206. In response, the hydraulic actuator 1202 is actuated, e.g., extends in the illustrated example, and the accumulator 1206 is pressurized simultaneously. The consequence of configuring these valves in this way is that the hydraulic actuator 1202 is actuated more slowly compared to the third valve 1220 being in the first position to prevent fluid flow to the accumulator 1206.

In some implementations, with the first valve 1214 in the second position to allow flow of fluid from the source of pressurized fluid 1204, the electronic controller 1224 is operable to coordinate operation of second valve 1208 and the third valve 1220 in a manner similar to that described above in the context of second valve 908 and third valve 1102. For example, in some instances, the electronic controller 1224 causes the second valve 1208 to move into the second position to permit fluid flow to the hydraulic actuator 1202 while keeping the third valve 1220 closed, e.g., in the first position. This causes the pressurized fluid to act on the hydraulic actuator 1202 without acting on the accumulator 1206, resulting in the hydraulic actuator 1202 actuating at an increased rate. The electronic controller 1224 senses the position of the float arms, whether directly (e.g., with one or more position sensors that sense a position of one or more float arms or a position of the hydraulic actuator) or indirectly (e.g., via sensing pressure of the fluid at the location 1210), and, as the float arms approach or reach a desired position, the electronic controller 1224 opens the third valve 1220 (e.g., moves the fourth valve to the second position) to cause the fluid pressure to act on the accumulator 1206, thereby charging the accumulator 1206. With the float arms reaches the desired position, the electronic controller closes the second valve 1208 to maintain the float arms at the desired location.

In some implementations, with the first valve 1214 in the first position to provide fluid communication between the location 1213 and the sump 1216, thereby directing fluid to the sump 1216, the electronic controller 1224 is operable to coordinate operation of the second valve 1208 and the third valve 1220 also in a manner similar to that described above in the context of second valve 908 and third valve 1102. For example, in some instances, the electronic controller 1224 causes the second valve 1208 to move into the second position to permit fluid flow from the hydraulic actuator 1202 to the sump 1216 while maintaining the third valve 1220 in the first position, thereby preventing fluid from the accumulator 1206 to flow to or towards the sump 1216. In this way, fluid is drained from the hydraulic actuator 1202 more quickly, thereby actuating (e.g., retracting) the hydraulic actuator 1202 more quickly because fluid from the accumulator 1206 is prevented from flowing by the third valve 1220. The electronic controller 1224 senses the position of the float arms, whether directly (e.g., with one or more position sensors that sense a position of one or more float arms or a position of the hydraulic actuator) or indirectly (e.g., via sensing pressure of the fluid at the location 1210), and, as the float arms approach or reach a desired position, the electronic controller 1224 opens the third valve 1220 (e.g., moves the fourth valve to the second position) to cause the fluid to drain from the accumulator 1206. Once the float arms reach the desired position, the electronic controller closes the second valve 1208 to maintain the float arms at the desired location. In some implementations, the electronic controller 1224 determines that the float arms are at the desired location by sensing the position of the float arms, such as with a position sensor that senses a position of the float arms or a fluid pressure sensor. In some instances, a fluid pressure sensed by a fluid pressure sensor, such as fluid pressure sensor 1212, is associated with a particular position of the float arms. Thus, when the sensed fluid pressure corresponds to the desired position, the electronic controller 1224 is able to determine that the float arms are at the desired position and move the first valve to the first position to prevent fluid flow to the hydraulic actuator 1202.

In some implementations, the fourth valve 1218 is operated independently of operation of the other valves to control a fluid pressure applied to the accumulator 1206. For example, in some implementations, the electronic controller 1224 moves or maintains the second valve 1208 in the first position to prevent fluid passage therethrough and the third valve 1220 in the first position to prevent fluid passage therethrough. With the second valve 1208 and the third valve 1220 closed, the electronic controller 1224 moves the fourth valve 1218 to the second position and the first valve 1214 to the first position to direct fluid from the source of pressurized fluid 1204 to the accumulator 1206 to charge the accumulator 1206, such as to a desired pressure. For example, the electronic controller 1224 receives information related to a pressure applied to the accumulator 1206, such as in the form of sensor output from the fluid pressure sensor 1222. When the pressure output received from the fluid pressure sensor 1222 corresponds to a desired pressure, the electronic controller 1224 closes the fourth valve 1218 (e.g., moves the fourth valve 1218 to the first position).

Reducing a pressure of the accumulator 1206 may be similarly performed. For example, in some implementations, the electronic controller 1224 moves the first valve 1214 to the second position to provide fluid communication with the sump 1216. The electronic controller 1224 also opens the fourth valve 1218, e.g., by moving the fourth valve 1218 to the second position, while maintaining the second valve 1208 and the third valve 1220 in the first position to prevent fluid flow respectively therethrough. In this way, fluid from the accumulator 1206 is permitted to drain from the accumulator 1206 without permitting fluid to drain from the hydraulic actuator 1202. In this way, the pressure of the accumulator 1206 is changed more quickly than if fluid from the hydraulic actuator 1202 was simultaneously drained. The electronic controller 1224 can utilize sensor output from the fluid pressure sensor 1222 to sense a pressure being applied to the accumulator 1206 and, when the sensed pressure reaches a desired pressure, the electronic controller 1224 moves the fourth valve 1218 to the first position to cease fluid flow therethrough.

In this way a pressure provided by the accumulator 1206 can be altered individually without fluid being directed to or drained from the hydraulic actuator 1202. In this way, a pressure applied to the accumulator 1206 can be altered more quickly.

In some implementations, the hydraulic circuit 1200 may include a bypass valve 1226 may be similar to the bypass valve 1104. The bypass valve 1226 operates similarly to the bypass valve 1104 and is arranged to open to provide fluid communication between the accumulator 1206 and the hydraulic actuator 1202 when a fluid pressure at location 1210 exceeds a selected fluid pressure valve. The purpose and function of the bypass valve 1226 is similar to that of the bypass valve 1104. Consequently, the explanation of the purpose and function of the bypass valve 1104 is applicable to the bypass valve 1226 and is not repeated here.

Although the hydraulic circuit 1200 is shown as extending the hydraulic actuator 1202 when pressurized fluid is introduced to the hydraulic actuator 1202, in other implementations, introduction of fluid to the hydraulic actuator 1202 causes the hydraulic actuator 1202 to retract. Further, in some implementations, extension of the hydraulic actuator 1202 causes one or more float arms to move towards or into the locked configuration. FIG. 4 illustrates an implementation in which extension of a hydraulic actuator pivots one or more float arms 302 towards or into the locked configuration. Similarly, retraction of the hydraulic actuator 1202 may result in movement of one or more float arms away from or out of the locked configuration, thus move the one or more float arms into a position of a plurality of positions associated with the unlocked configuration. In other implementations, retraction of the hydraulic actuator 1202 causes one or more float arms to move towards or into the locked configuration, and extension of the hydraulic actuator 1202 causes the one or more float arms to into the unlocked configuration from the locked configuration or from one position in the unlocked configuration to another position in the unlocked configuration. Again, FIG. 4 illustrates an example implementation of how one or more float arms are moved along an angular range that includes a position corresponding to the locked configuration at a limit of the range and a plurality of positions corresponding to the unlocked configuration.

FIG. 10 is referenced again, this time in the context of the example hydraulic circuit 1200. The description of features 1002, 1004, 1006, and 1007, provided earlier, are applicable here and are not repeated. Although the features 1002, 1004, 1006, and 1007 are applicable here, additional details are provided which may be used in addition to or in place of one or more of the details described above in the context of 1002, 1004, 1006, and 1007. For example, for feature 1002, in some implementations, a desired position of the float arm (or float arms) is input by a user, such as via an input device. A desired position of the float arm may be received from a user (e.g., an operator of a combine harvester), from a user at a remote location, from an electronic controller, or from another source. In some implementations, the electronic controller 1224 receives the input for the desired position of the float arm.

At 1008, when actuating the actuator to move the float arm in a first direction, e.g., in the direction of arrow 404 in FIG. 4, towards the locked configuration, with reference to FIG. 12, the second valve 1208 is moved to the second position and the first valve 1214 is moved to the second position. Placing valves 1208 and 1214 in this configuration directs fluid from the source of pressurized fluid 1204 to the hydraulic actuator 1202 to cause the hydraulic actuator 1202 to actuate. For example, in the illustrated example of FIG. 12, the hydraulic actuator 1202 extends in response to the pressurized fluid. With the fourth valve 1218 in the first position and with the third valve 1220 in the first position, fluid is prevented from being transmitted to the accumulator 1206. With the third valve 1220 in the second position, the pressurized fluid is also directed to the accumulator 1206 simultaneously with fluid directed to the hydraulic actuator 1202. Therefore, to make the hydraulic actuator 1202 respond more quickly to introduction of the fluid, the fourth valve 1218 and the third valve 1220 are placed in their respective first positions, thereby blocking fluid flow to the accumulator 1206. In this way, fluid directed to location 1210 is not used to pressurize the accumulator 1206, and the fluid pressure is applied exclusively to the hydraulic actuator 1202, causing the hydraulic actuator 1202 to respond more quickly. In some implementations, the third valve 1220 is placed in the second position, thereby allowing the pressurized fluid to pressurize the accumulator 1206. In some implementations, with the valves 1208, 1214, and 1220 in their respective second position, the fourth valve 1218 may be placed in the second position to permit fluid flow from the location 1213 to the accumulator 1206. In other instances, with the third valve 1220 in the first position, the fourth valve 1218 may be placed in the first position to isolate the accumulator 1206, thereby causing the fluid flow to be exclusively directed to the hydraulic actuator 1202.

At 1010, actuation of the hydraulic actuator 1202 is ceased when a position of the float arm corresponds to a desired position. With the fourth valve 1218 and the third valve 1220 placed in their respective first positions and, thus, closed, actuation of the hydraulic actuator 1202 and, consequently, movement of the float arm are ceased in response to movement of the second valve 1208 into the first position to stop fluid flow to the location 1210. Referring to FIG. 12, in some implementations, the third valve 1220 moves to the second position to provide fluid communication to the accumulator 1206 when the float arm has reached the desired position. In still other implementations, the second valve 1208 and the third valve 1220 are operated in concert to control pressure applied to the first location 1210, as shown in FIG. 12. For example, in some instances, moving the third valve 1220 to the second location may reduce the fluid pressure applied to hydraulic actuator 1202 as the accumulator 1206 is pressurized. As a result, a position of the float arm may be altered or a rate at which the float arms are made to move may be altered. To maintain the float arm at the desired position, moving the third valve 1220 to the second position may be coordinated with moving the second valve 1208 to the second position to introduce additional fluid pressure to location 1210 and, thus, maintain the float arm at the desired position as the accumulator 1206 is pressurized. The second valve 1208 is moved to the first position to cease fluid communication to the location 1210 in response to the accumulator 1206 being charged and the float arm maintained at the desired location.

At 1012, the third valve 1220 may also be operated to isolate the accumulator 1206 to increase the responsiveness of the actuator 1202 to move the float arm to the desired position. With the third valve in the first position, by moving the third valve 1220 to the first position and moving the second valve 1208 to the second position and the first valve 1214 to the first position, fluid from hydraulic actuator 1202, alone, is flowed to the sump 1216. Because the accumulator 1206 is isolated, fluid from the accumulator 1206 is retained. Because additional fluid from the accumulator 906 is excluded from the conduit or conduits carrying the fluid to the sump 1216, there is a reduced volume of fluid to be moved, and, consequently, the hydraulic actuator 1202 is actuated more quickly. The float arm position is, accordingly, moved more quickly in response. In some implementations, the fourth valve 1218, the third valve 1220, or both is moved to the second position, thereby opening the valve or valves, so that the pressure applied to the accumulator 1206 is simultaneously reduced as the hydraulic actuator 1202 is actuated to alter a position of the float arm.

In some implementations, when the hydraulic actuator 1202 is actuated with the fluid from the source of pressurized fluid 1206 to move the float arms to the desired position with the third valve 1220 in the first position, thereby preventing fluid flow to the accumulator 1206 and with the fourth valve 1218 in the first position also preventing fluid flow to the accumulator 1206, once the float arms are moved to the desired location, the second valve 1208 is moved to the first position to provide fluid communication with the sump 1216. In this situation, a pressure of the accumulator 1206 may not correspond to a pressure at the location 1210. Consequently, the pressure applied to the accumulator 1206 may be different than the pressure applied to the hydraulic actuator 1202. To equalize the pressure applied to the accumulator 1206 with the pressure applied to the hydraulic actuator 1202 and without causing a fluctuation or change to the position of float arm or limiting a change to a position of the float arm, the third valve 1220 is closed, e.g., moved to the first position; the fourth valve 1218 is opened, e.g., moved to the second position; the second valve 1208 is maintained in the first position to prevent fluid flow therethrough; and the first valve 1214 is moved or maintained in the second position to permit fluid flow to the accumulator 1206 from the source of pressurized fluid 1204 without causing fluid to pass to the hydraulic actuator 1202. The fluid is directed to the accumulator 1206, and the fluid flow can be maintained until pressure applied to the accumulator 1206 reaches a desired pressure level. The fluid pressure applied to the accumulator 1206 can be sensed, for example, with the fluid pressure sensor 1222. In some implementations, the desired pressure level is the fluid pressure applied to the hydraulic actuator 1202. Thus, in some instances, when the fluid pressure sensed by the fluid pressure sensor 1222 is the same as the fluid pressure sensed by the fluid pressure sensor 1212, the fourth valve 1218 is moved to the first position to case fluid flow to the accumulator 1206. Thereafter, in some instances, the third valve 1220 is moved to the second position to provide fluid communication with the hydraulic actuator 1202. Because the pressures at the accumulator 1206 and the hydraulic actuator 1202 are the same, the hydraulic actuator 1202 is not further actuated and the position of the float arms is maintained. The electronic controller 1204 can be utilized to perform these operations.

Reducing a pressure at the accumulator 1206 without affecting a pressure applied to the hydraulic actuator 1202, and, thus, maintaining the float arms at a desired location, may be similarly performed. For example, the third valve 1220 is placed in the first position, the second valve 1208 is placed in the first position; the first valve 1214 is placed in the first position to provide fluid communication with the sump 1216; and the third valve is moved to the second position. As a result, fluid will flow from the accumulator 1206 to the sump 1216 but not from the hydraulic actuator 1202. Fluid from the accumulator 1206 is allowed to continue until a pressure applied to the accumulator 1206 is at a desired level. In some implementations, the desired pressure level of the accumulator 1206 is the fluid pressure level applied to the hydraulic actuator 1202. Therefore, once the fluid pressure sensed by the fluid pressure sensor 1222 is the same as the fluid pressure sensed by the fluid pressure sensor 1212, the fourth valve 1218 is moved to the first position and closed. The third valve 1220 may be moved to the second position to provide fluid communication between the accumulator 1206 and the hydraulic actuator 1202. Because the pressures being applied to both are the same, opening the fourth valve does not affect a position of the hydraulic actuator 1202 and, consequently, a position of the float arm.

In other implementations, a pressure applied to the accumulator 1206 may be increased without affecting a fluid pressure applied the hydraulic actuator 1202 and, thus, without altering a position of the hydraulic actuator 1202 and the float arm. For example, the third valve 1220 is moved to or maintained at the first position; the fourth valve 1218 is moved to or maintained as the second position; the second valve 1208 is moved to or maintained at the first position; and the first valve 1214 is moved to the second position to flow fluid from the accumulator 1206 to the sump 1216. In some instances, fluid flow from the accumulator 1206 is ceased when the fluid pressure applied thereto reaches a desired fluid pressure. When the desired pressure is reached, the fourth valve 1218 is moved to the first position and closed to stop fluid flow from the accumulator 1206. It may be desirable, for example, to cease fluid flow from the accumulator 1206 when the fluid pressure applied thereto equals the fluid pressure applied to the hydraulic actuator 1202. Thus, when a fluid pressure sensed by the fluid pressure sensor 1222 is the same as the fluid pressure sensed by the fluid pressure sensor 1212, the fourth valve 1218 is moved to the first position and closed. The third valve 1220 can be opened to provide fluid communication between the accumulator 1206 and the hydraulic actuator 1202, and, because the fluid pressures applied to both are the same, as sensed by the sensors 1222 and 1212, opening the third valve 1220 in this way does not alter a position of the hydraulic actuator. Consequently, a position of the float arm is not changed.

At 1014, ceasing actuation of the actuator when the position of the float arm corresponds to the desired position may include coordinating movement of the different valves. Thus, when the float arm has reached the desired position, the second valve 1208 is moved to the first position to cease fluid flow to the sump 1216. Where the third valve 1220 is in the first position as fluid is drained from the hydraulic actuator 1202 to the sump 1216, when the third valve 1220 is moved to the second position to provide fluid communication to the accumulator 1206, the increase in fluid pressure applied to the hydraulic actuator 902 may alter a position of the float arm. Consequently, in some implementations, movement of the third valve 1220 is coordinated with movement of the second valve 908 to maintain the float arm at the desired position. In some instances, this coordinated movement may include opening, closing, or both the third valve 1220 and the second valve 1208 separately from each other, for example, based on fluid pressure at location 1210, to maintain the float arms at a desired location. For example, moving the third valve 1220 to the second position allows fluid flow from the accumulator 1206 to the hydraulic actuator 1202. To offset this increased pressure applied to the hydraulic actuator 1202 from the accumulator 1206, the second valve 1208 is moved to the second position, thereby allowing fluid pressure applied to the hydraulic actuator 902 to be reduced by allowing fluid to be removed to the sump 1216. The second valve 1208 is then returned to the first position when, for example, the float arm has returned to the desired position or when a pressure applied to the actuator 902 has stabilized or been maintained at a desired pressure corresponding to the desired position of the float arm.

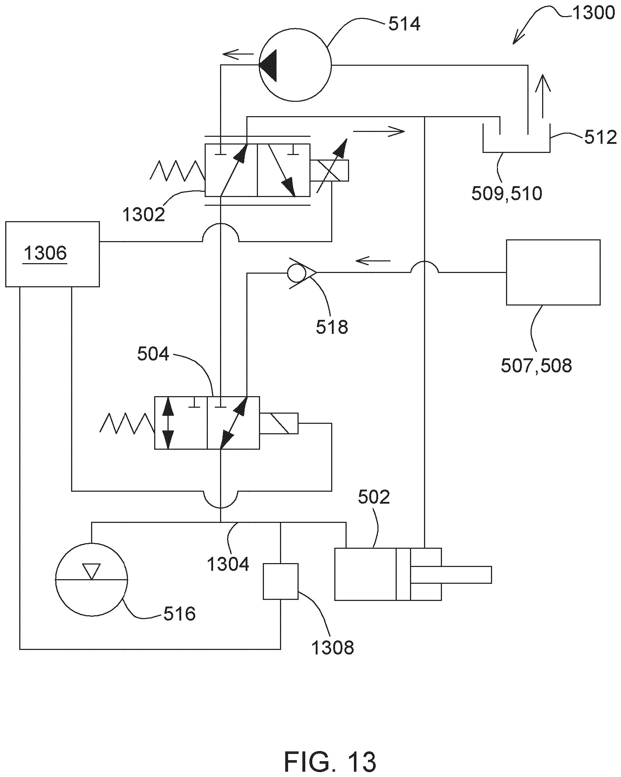

FIG. 13 is a schematic view of another hydraulic circuit 1300 that is similar to the hydraulic circuit 500, discussed earlier. The description associated with the hydraulic circuit 500 is applicable to the hydraulic circuit 1300 except where noted. Components similar to those described in the context of FIGs. 5 and 6 are given the same reference number and the descriptions thereof provided above are applicable here and are not repeated. Instead of a pressure relief valve, i.e., valve 506, the hydraulic circuit 1300 includes a proportional valve 1302. In some implementations, the proportional valve 1302 is a solenoid-operated proportional valve. Other types of proportional valves may also be used. The proportional valve 1302 is able to adjust a pressure of the fluid transmitted to location 1304. In some implementations, the proportional valve 1302 is operable to adjust the transmitted fluid pressure over a range. An example pressure range is between 550 pounds per square inch (psi) (3.8 megapascals (MPa)) and 2200 psi (15.2 MPa). However, in other implementations, a different pressure range can be used.

The fluid pressure at location 1304 is the fluid pressure that acts on hydraulic cylinder 502. By controlling a fluid pressure at the location 1304, an amount of actuation (e.g., extension or retraction of a hydraulic cylinder) of the hydraulic actuator 502 is controlled in response. The hydraulic circuit 1300 also includes an electronic controller 1306, which may be similar to electronic controller 700, 922, or 1224. The electronic controller 1306 is operable to control operation of various components of the hydraulic circuit 1300 and receive data, information, or both from other sources, such as output from a fluid pressure sensor 1308.

The electronic controller 1306 may be similar to electronic controller 702 and may form part of a control system, such as control system 700. Thus, in some implementations, the electronic controller 1306 is used to control operation of the various aspects of operation of the hydraulic circuit 1300, including controlling operation of the valves 504 and 1302. Consequently, in some implementations, the one or more first valves 703, described above, includes the valves 504 and 1302. Further, in some implementations, the electronic controller 1306 includes software, such as software 722, that includes instructions to control operation of the valves 504 and 1302. For example, the software may include instructions to cause the electronic controller 1306 to perform a method, such as method 1000.

With the first valve 504 in the first position, hydraulic fluid 508 from the first source of pressurized fluid 507 is communicated through the first valve 504 and to the hydraulic actuator 502, placing the float arm into the locked configuration. In the second position, the pressurized fluid 508 from the first source of pressurized fluid 507 is prevented from passing through the first valve 504. In the second position, the first valve 504 provides fluid communication with the proportional valve 1302. The proportional valve 1302 is configurable into a plurality of positions that alters a pressure of fluid that passes therethrough. In this way, the proportional valve 1302 is able to alter a pressure of fluid from the second pressurized fluid 509 that acts on the hydraulic actuator 502 via the first valve 504. For example, the electronic controller 1306 controls a position of the proportional valve to adjust how much hydraulic pressure of the second hydraulic fluid 509 is permitted to be transmitted and, thus, applied to the hydraulic actuator 502. An amount of fluid pressure of the second pressurized fluid 509 transmitted through proportional valve 1302 corresponds to a particular position of the hydraulic actuator 502. For example, a first amount of fluid pressure of the second hydraulic fluid 509 that acts on the hydraulic actuator 502 has a corresponding amount of actuation of the hydraulic actuator 502. Similarly, a second amount of fluid pressure of the second hydraulic fluid 509, different from the first amount of fluid pressure, corresponds to a second amount of actuation of the hydraulic actuator 502, different from the first amount of actuation. As a result, by controlling a position of the proportional valve 1306, an amount of actuation of the hydraulic actuator 502 is also controlled and, hence, a position of the float arm in the unlocked configuration is also controlled, as shown, for example, in the context of FIG. 4.

FIG. 10 is referenced again, this time in the context of the example hydraulic circuit 1300. The description of features 1002, 1004, 1006, and 1007, provided earlier, is applicable here and are not repeated. Although the features 1002, 1004, 1006, and 1007 are applicable here, additional details are provided which may be used in addition to or in place of one or more of the details described above in the context of 1002, 1004, 1006, and 1007. For example, for feature 1002, in some implementations, a desired position of the float arm (or float arms) is input by a user, such as via an input device. A desired position of the float arm may be received from a user (e.g., an operator of a combine harvester), from a user at a remote location, from an electronic controller, or from another source. In some implementations, the electronic controller 1306 receives the input for the desired position of the float arm.

At 1012, with the first valve 504 in the first position and, thus, the float arm in the locked configuration, the electronic controller 1306 moves the first valve 504 into the second position to cease transmission of the first pressurized fluid 508 and provide communication with the proportional valve 1302. The electronic controller 1306 sends one or more signals to the proportional valve 1302 to move the proportional valve 1302 to a configuration that corresponds to the desired position of the float arm. In some instances, the electronic controller 1306 includes a lookup table that relates a configuration (e.g., a position or setting) of the proportional valve 1302 to a corresponding position of the float arm, a corresponding amount of actuation of the hydraulic actuator 502, or both. In some implementations, the electronic controller 502 uses a mathematical relationship, e.g., a mathematical equation or set of equations, to convert a desired position of the float arm into a corresponding configuration of the proportional valve 1302. In still other implementations, other methods of determining a configuration of the proportional valve 1302 in response to a desired position of the float arm may also be used.

The electronic controller 1306 then transmits a signal to the proportional valve 1302 to alter the configuration of the proportional valve 1302 to a configuration that corresponds to the desired position of the float arm. In response, the proportional valve 1302 adjusts to the desired configuration, thereby transmitting a selected amount of fluid pressure of the second pressurized fluid 509 to the hydraulic actuator 502 via the first valve 504. As a result, the float arm is placed in the desired position. The operation described is similar to moving the float arm from the first limit position 313 to position 400, as shown in the example of FIG. 4.

In some implementations, the electronic controller 1306 also receives input from the fluid pressure sensor 1308 as a feedback signal to verify that the float arm is at the desired position. For example, the electronic controller 1306 receives a signal indicative of the fluid pressure at the location 1304. If the fluid pressure sensed by the fluid pressure sensor 1308 does not correspond to the determined fluid pressure associated with the desired position of the float arm, the electronic controller 1306 alters the position of the proportional valve 1302 to alter an amount of fluid pressure of the second pressurized fluid 509 applied to the hydraulic actuator 502. In some implementations, the electronic controller 1306 continues this feedback approach until the fluid pressure at the location 1304 corresponds to the fluid pressure associated with the desired position of the float arm.

In other implementations, the electronic controller 1306 may receive input from a float arm position sensor, a hydraulic actuator position sensor that senses a position of the hydraulic actuator 502, or both. In some implementations, the electronic controller 1306 utilizes the output of the position sensor or sensors as feedback to alter a configuration of the proportional valve 1302, as needed, to ensure that the position of the float arm corresponds to the desired position of the float arm.

In some instances, the float arm may be at one position within the range of positions corresponding to the unlocked configuration, and the desired position is another position within the range of positions of the unlocked configuration but farther away from the position associated with the locked configuration. Again, an example of this scenario is illustrated in FIG. 4, e.g., moving from position 406 to position 400. In response to the inputted desired position, the electronic controller 1306 determines an amount of movement of the proportional valve 1302 that corresponds to the desired position of the float arm. The electronic controller 1306 outputs a signal or signals to the proportional valve 1302 that cause the proportional valve 1302 to alter its configuration, thereby altering an amount of fluid pressure passing therethrough. This altered fluid pressure operates on the hydraulic actuator 502 to cause the hydraulic actuator 502 to actuate, thereby moving the float arm to the desired position. This explanation is applicable to both moving the float arm in a first direction, such as the direction of arrow 408 shown in FIG. 4, and in a second direction, such as the direction of arrow 404, also shown in FIG. 4. Because the proportional valve 1302 is alterable to selectively alter a fluid pressure transmitted thereby, which causes a selected amount of actuation of the hydraulic actuator 502 and, thus, a selected amount of movement of the float arm into the desired position, once the proportional valve 1302 moves in response to the signal or signals from the electronic controller, the float arm ceases to move once actuation of the hydraulic actuator 502 in response to the changed fluid pressure ceases. That is, actuation of the hydraulic actuator 502 ceases automatically when the forces on the hydraulic actuator 502 balance, e.g., fluid pressure acting on the hydraulic actuator 502 is balanced by the forces applied to the hydraulic actuator 502 by the float arm. Thus, the float arm will remain at the position associated with the position of the proportional valve 1302 for as long as the proportional valve 1302 remains at that position. Therefore, in the context of 1014, actuation of the hydraulic actuator ceases automatically when the forces acting on the hydraulic actuator, e.g., forces applied to the hydraulic actuator by the float arm and the fluid pressure acting on the hydraulic actuator, balance.

As explained above, a desired position of the float arm may also be received when the float arm already occupies a position in the unlocked configuration. When the desired position is received, in some instances, the electronic controller 1306 compares the desired position to the current position of the float arm, at 1006. If the positions are different, the electron controller 1306 alters the position of the float arm by altering a configuration of the proportional valve 1302, such as in the manner described above. Similarly, at 1008, if the current position of the float arm is a position in a range of positions in the unlocked configuration of the float arm and the desired position of the float arm corresponds to the locked configuration, then the electronic controller moves the first valve 502 into the first position to cease transmission of the second pressurized fluid 509 and transmit the first pressurized fluid 507 to the hydraulic actuator 502. A pressure of the first pressurized fluid 507 is selected such that transmission of the first pressurized fluid 507 to the hydraulic actuator 502 causes actuation thereof (e.g., fully extension or full retraction of a hydraulic cylinder) to place the float arm in the locked configuration.

In some instances, the desired position is a position in the range of positions of the unlocked configuration and the present position is a position in the range of positions of the unlocked configuration farther from the position associated with the locked position. Again, this example is illustrated in FIG. 4 with the desired position corresponding to position 400 and the current position being position 402. In response, the electronic controller 1306 transmits a signal or signals to the proportional valve 1302 that cause the proportional valve 1302 to move to a position that permits an amount of fluid pressure to cause the hydraulic actuator 502 to actuate an amount to move the float arm to the desired position. At 1010, actuation of the hydraulic actuator 502 ceases automatically when the forces on the hydraulic actuator 502 balance, e.g., fluid pressure acting on the hydraulic actuator 502 is balanced by the forces applied to the hydraulic actuator 502 by the float arm. Stated another way, when the float arm is at an at rest state, the float arm will remain at the position associated with the position of the proportional valve 1302 for as long as the proportional valve 1302 remains at that position. In this way, the proportional valve 1302 maintains a selected amount of hydraulic pressure acting on the hydraulic actuator 502.

With the float arm at rest, this hydraulic pressure remains unchanged until a position of the proportional valve 1302 changes. However, with the proportional valve 1302 maintained at a selected position, fluid pressure at location 1304 can vary in response to movement of the float arm, such as during a harvesting operation as the float arm contacts and follows the topography of the ground. Articulation of the float arm in this way causes movement of the hydraulic actuator 502 (e.g., extension and retraction in response to movement of the float arm). This operation of the hydraulic actuator 502 alters a fluid pressure at location 1304. With the proportional valve 1302 at a constant position and with the first valve 204 at the second position, these fluid pressure changes at location 1304 are absorbed or accommodated by the accumulator 516, as explained above. In this way, the float arm is permitted to move (e.g., follow the topography of the ground) notwithstanding the float arm being in the unlocked configuration and application of a desired amount of fluid pressure to the hydraulic actuator 502.

In some implementations, a position of the first valve 504, the proportional valve 1302, or both is altered in response to a position of a gauge wheel of an agricultural header. For example, when the gauge wheel is moved to the fully extended position or an input to move the gauge wheel into the extended position is received, the first valve 502 is moved to the first position to provide fluid communication with the first pressurized fluid 507. As a result, the float arm is placed in the locked configuration. Additionally, if the gauge wheel is retracted, the configuration of the float arm may also be altered. For example, with the gauge wheel retracted, whether fully or otherwise, the float arm may be placed into a desired position within the range of positions corresponding to the unlocked configuration. As such, the first valve 502 is moved to the second position to cease transmission of the first pressurized fluid 507, and a configuration of the proportional valve 1302 may be altered, as described above, for example, to place the float arm in the desired position.

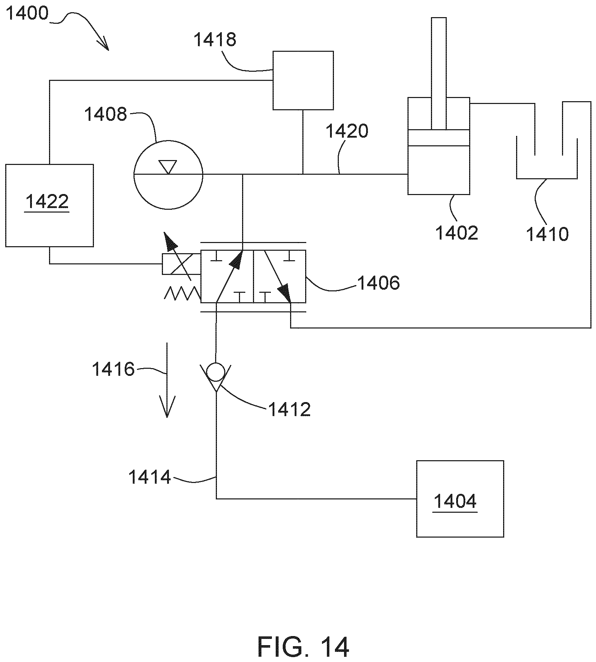

FIG. 14 is another example hydraulic circuit 1400 that is operable to control movement of a float arm. More particularly, the hydraulic circuit 1400 is operable to selectively position one or more float arms into a plurality of positions, such as a position corresponding to the locked configuration and one or more positions corresponding to the unlocked configuration. For example, as described earlier, the unlocked configuration may correspond to a range of positions, as shown, for example, in FIG. 4.

The hydraulic circuit 1400 includes a hydraulic actuator 1402 (which may be similar to the other hydraulic actuators 504, 902, or 1102, or another hydraulic actuator within the scope of the present disclosure), a source of pressurized fluid 1404, and a proportional valve 1406, an accumulator 1408, and a sump 1410. In some implementations, the accumulator 1408 may be omitted. In some implementations, the proportional valve 1406 is a solenoid operated proportional valve. In other implementations, the proportional valve may be other types of proportional valves. The hydraulic circuit 1400 also includes a check valve 1412 disposed in a line 1414 extending between the source of pressurized fluid 1404 and the proportional valve 1406. The check valve 1412 prevents fluid flow in the direction of arrow 1416 from the proportional valve 1406. In some implementations, the fluid of the source of pressurized fluid 1404 is a hydraulic liquid, such as an oil or another type of hydraulic fluid.

The hydraulic circuit 1400 also includes a fluid pressure sensor 1418 operable to sense a fluid pressure at a location 1420 of the hydraulic circuit 1400 and an electronic controller 1422. The hydraulic actuator 1402 and the accumulator 1408 are located at location 1420. The electronic controller 1422 may be similar to the electronic controller 702, 922, 1224, or 1306. For example, in some implementations, the electronic controller 1422 may be similar to electronic controller 702 and may form part of a control system, such as control system 700. Thus, in some implementations, the electronic controller 1422 is used to control operation of the various aspects of operation of the hydraulic circuit 1400, including controlling operation of the valve 1406. Consequently, in some implementations, the one or more first valves 703, described above, includes the valve 1406. Further, in some implementations, the electronic controller 1422 includes software, such as software 722, that includes instructions to control operation of the valve 1406. For example, the software may include instructions to cause the electronic controller 1422 to perform a method, such as method 1000.

To control actuation of the hydraulic actuator 1402 and, hence, a position of a float arm coupled thereto, an input is received by the electronic controller 1422. The input may be a type of input and received in a manner as described herein. In some implementations, to move the float arm into or towards a position corresponding to the locked configuration, for example, in the direction of arrow 404 in the context of the example of FIG. 4, the electronic controller 1422 identifies, such as by a lookup table, a mathematical relationship, or in another way, as described earlier, for example, a position of the proportional valve 1406 that will permit an amount of fluid pressure from the source of pressurized fluid that will result in the hydraulic actuator 1402 to move a selected amount. Based on this determined position of the proportional valve 1406, the electronic controller 1422 transmits one or more signals to the proportional valve 1406 to alter a position thereof that permits passage of an amount of fluid pressure to cause a selected amount of actuation of the hydraulic actuator 1402 and, hence, movement of the float arm to move to the desired position. This selected amount of actuation of the hydraulic actuator 1402 results in the float arm moving to the desired position. As described above in the context of proportional valve 1302, each position of the float arm corresponds to a particular amount of fluid pressure being transmitted to the hydraulic actuator 1402 by the proportional valve 1406. Thus, for any given position of the float arm, the electronic controller 1422 can determine a position of the proportional valve 1406 that results in the amount of pressure needed to actuate the hydraulic actuator 1402 to cause the float arm to move to the desired position.

In some implementations, the electronic controller 1422 may utilize a feedback control to verify that the float arm has moved to the desired position. In some implementations, the electronic controller 1422 includes information that relates a fluid pressure applied to the hydraulic actuator 1402 with a corresponding position of the float arm. Thus, for each fluid pressure, the float arm position is determinable. Thus, once the electronic controller 1422 determines a position of the proportional valve 1406 associated with the desired position of the float arm, the electronic controller 1422 receives one or more signals from the fluid pressure sensor 1418 that is indicative of a fluid pressure at the location 1420 and, hence, a pressure being applied to the hydraulic actuator 1402. If the sensed fluid pressure does not correspond to the pressure associated with the desired position of the float arm, the electronic controller 1422 generates a signal to alter the position of the proportional valve 1406 in order to alter a fluid pressure applied to the hydraulic actuator 1402. For example, if the sensed fluid pressure exceeds the fluid pressure associated with the desired position of the float arm, the electronic controller 1422 generates a signal to alter a position of the proportional valve 1406 that reduces the fluid pressure applied to the hydraulic actuator 1402. Where the sensed fluid pressure is less than the fluid pressure associated with the desired position of the float arm, the electronic controller 1422 generates a signal to alter the position of the proportional valve 1406 to increase a fluid pressure applied to the hydraulic actuator 1402. In some implementations, this process repeats until the sensed fluid pressure correspond to the fluid pressure associate with the desired position of the float arm.

In other implementations, a position sensor that senses a position of the float arm is used to provide feedback to the electronic controller 1422 to ensure that the float arm is at the desired location. For example, the electronic controller 1422 receives one or more signals from the position sensor and compares the detected float arm position with the desired position. If the sensed position and the desired position do not correspond, the electronic controller 1422 generates one or more signals to alter a position of the proportional valve 1406 to move the float arm towards the desired position. This feedback may be utilized until the sensed position corresponds to the desired position.

FIG. 10 is again reference, this time in the context of the example hydraulic circuit 1400. Although the description of features 1002, 1004, 1006, and 1007, provided earlier, is applicable here, additional details are provided which may be used in addition to or in place of one or more of the details described above in the context of 1002, 1004, 1006, and 1007. For example, for feature 1002, in some implementations, a desired position of the float arm (or float arms) is input by a user, such as via an input device. A desired position of the float arm may be received from a user (e.g., an operator of a combine harvester), from a user at a remote location, from an electronic controller, or from another source. The electronic controller 1422 receives the input for the desired position of the float arm.

At 1008, the proportional valve 1406 is positioned to transmit an amount of fluid pressure to actuate the hydraulic actuator 1402 by a selected amount, thereby causing the float arm to move to the desired position. For example, the electronic controller 1422 transmits one or more signals to the proportional valve 1406 to move a selected amount that permits the passage of an amount of fluid pressure to actuate the hydraulic actuator 1402 by a selected amount. This selected amount of actuation of the hydraulic actuator 1402 moves the float arm a selected amount to place the float arm in the desired position. As mentioned earlier, the proportional valve 1406 remains at the selected amount of movement thereof for as long as the float arm is to remain at the desired position. Consequently, at 1010, the hydraulic actuator 1402 ceases to actuate when the selected amount of fluid pressure corresponding to the desired position of the float arm that is transmitted by the proportional valve 1406 is balanced by a force applied to the hydraulic actuator 1402 by the float arm. When a new desired position, whether the new desired position corresponds to locked configuration or one of the positions corresponding to the unlocked configuration, is inputted, the electronic controller 1422 transmits one or more additional signals to the proportional valve 1406 to alter a position of the proportional valve that corresponds to the new desired location of the float arm.

At 1012, the hydraulic circuit 1400 operates in a manner similar to that described above in the context of 1010. The electronic controller 1422 transmits one or more signals to proportional valve 1406 that will alter a configuration of the proportional valve to transmit fluid pressure that corresponds to the desired position of the float arm. At 1014, the movement of the float arm ceases at the desired position in response to the forces applied to the hydraulic actuator 1402 becoming balanced, i.e., the transmitted fluid pressure being balanced by the forces applied by the float arm.

In some implementations, a position of the float arms, e.g., in a position corresponding to the locked configuration or another position corresponding to a position of a range corresponding to the unlocked configuration, may be selected, such as by an operator. In other implementations, a position of the float arm is tied to a position or setting of a gauge wheel (which also encompasses a plurality of gauge wheels) of an agricultural header. For example, when the gauge wheel of a header is placed in a fully extended position, in response, the float arms placed in the locked configuration. When the gauge wheel or wheels are retracted, either fully or partially, the float arms are automatically moved to a desired position within a range of positions corresponding to the unlocked configuration. Association of the position of the float arms with a position of the gauge wheels may be preselected such that the float arms move automatically in response to a particular setting of the gauge wheel. Accordingly, in some instances, the desired position to which the float arms are to be moved in response to retraction of the gauge wheel is preselected, and the float arms are automatically moved to the desired position in response to retraction of the gauge wheels. Thus, in some implementations, when the gauge wheel is retracted, whether fully or partially, the float arms are automatically moved to the desired position.

In some implementations, the gauge wheel can be retracted to a plurality of positions within a range of retraction. A particular desired position of the float arms may be associated with one or more of these positions along this range of retraction. For example, a first desired position of the float arms is associated with a first amount of retraction or a first selected range of positions of the gauge wheel within the range of retraction, and a second desired position of the float arms is associated with a second amount of retraction or a second selected range of positions of the gauge wheel within the range of retraction. In some instances, any number of desired positions of the float arms may be associated in this way. Therefore, when the gauge wheel is retracted to a particular position, the float arms are automatically moved to the desired position associated with the particular retracted position of the gauge wheel.

In some implementations, as explained in the context of the examples explained earlier, the desired position in the unlocked configuration to which the float arm is moved in response to movement of the gauge wheel is controlled via fluid pressure applied to an actuator or actuators that controls movement of the float arms. In some instances, an electronic controller, such as an electronic controller as described herein, stores fluid pressure information corresponding to a float arm position. Thus, the fluid pressure associated with the desired position of the float arm in the unlocked configuration that is linked to retraction of the gauge wheel, whether partially or fully, is used to control operation of one or more valves to apply the fluid pressure corresponding to the desired position when the gauge wheel is retracted. In this way, the float arms are moved to the desired position in response to the retraction of the gauge wheel. Similarly, the electronic controller stores fluid pressure information associated with placing the float arm in the locked configuration. The electronic controller uses that fluid pressure information to control one or more valves to place the float arms in the locked configuration when the gauge wheel is extended, e.g., fully extended. In this way, automatically controlling a position of the float arms in response to movement of the gauge wheel is provided.

Without in any way limiting the scope, interpretation, or application of the claims appearing below, a technical effect of one or more of the example implementations disclosed herein is to maintain a header in close proximity with a surface while avoiding driving a portion of the header, e.g., one or more float arms, into the ground. Thus, the present disclosure provides for reducing or eliminating a risk of damage to a field and a header due to pushing, as described herein. Another technical effect of one or more of the example implementations disclosed herein is a reduction in operating costs of a harvesting operation by reducing or avoiding repair costs associated with pushing.

FIG. 15 is a block diagram of an example computer system 1500 used to provide computational functionalities associated with described algorithms, methods, functions, processes, flows, and procedures described in the present disclosure, according to some implementations of the present disclosure. The illustrated computer 1502 is intended to encompass any computing device such as a server, a desktop computer, a laptop/notebook computer, a wireless data port, a smart phone, a personal data assistant (PDA), a tablet computing device, or one or more processors within these devices, including physical instances, virtual instances, or both. The computer 1502 can include input devices such as keypads, keyboards, and touch screens that can accept user information. Also, the computer 1502 can include output devices that can convey information associated with the operation of the computer 1502. The information can include digital data, visual data, audio information, or a combination of information. The information can be presented in a graphical user interface (UI) (or GUI).

The computer 1502 can serve in a role as a client, a network component, a server, a database, a persistency, or components of a computer system for performing the subject matter described in the present disclosure. The illustrated computer 1502 is communicably coupled with a network 1530. In some implementations, one or more components of the computer 1502 can be configured to operate within different environments, including cloud-computing-based environments, local environments, global environments, and combinations of environments.

At a high level, the computer 1502 is an electronic computing device operable to receive, transmit, process, store, and manage data and information associated with the described subject matter. According to some implementations, the computer 1502 can also include, or be communicably coupled with, an application server, an email server, a web server, a caching server, a streaming data server, or a combination of servers.

The computer 1502 can receive requests over network 1530 from a client application (for example, executing on another computer 1502). The computer 1502 can respond to the received requests by processing the received requests using software applications. Requests can also be sent to the computer 1502 from internal users (for example, from a command console), external (or third) parties, automated applications, entities, individuals, systems, and computers.

Each of the components of the computer 1502 can communicate using a system bus 1503. In some implementations, any or all of the components of the computer 1502, including hardware or software components, can interface with each other or the interface 1504 (or a combination of both), over the system bus 1503. Interfaces can use an application programming interface (API) 1512, a service layer 1513, or a combination of the API 1512 and service layer 1513. The API 1512 can include specifications for routines, data structures, and object classes. The API 1512 can be either computer-language independent or dependent. The API 1512 can refer to a complete interface, a single function, or a set of APIs.

The service layer 1513 can provide software services to the computer 1502 and other components (whether illustrated or not) that are communicably coupled to the computer 1502. The functionality of the computer 1502 can be accessible for all service consumers using this service layer. Software services, such as those provided by the service layer 1513, can provide reusable, defined functionalities through a defined interface. For example, the interface can be software written in JAVA, C++, or a language providing data in extensible markup language (XML) format. While illustrated as an integrated component of the computer 1502, in alternative implementations, the API 1512 or the service layer 1513 can be stand-alone components in relation to other components of the computer 1502 and other components communicably coupled to the computer 1502. Moreover, any or all parts of the API 1512 or the service layer 1513 can be implemented as child or sub-modules of another software module, enterprise application, or hardware module without departing from the scope of the present disclosure.

The computer 1502 includes an interface 1504. Although illustrated as a single interface 1504 in FIG. 15, two or more interfaces 1504 can be used according to particular needs, desires, or particular implementations of the computer 1502 and the described functionality. The interface 1504 can be used by the computer 1502 for communicating with other systems that are connected to the network 1530 (whether illustrated or not) in a distributed environment. Generally, the interface 1504 can include, or be implemented using, logic encoded in software or hardware (or a combination of software and hardware) operable to communicate with the network 1530. More specifically, the interface 1504 can include software supporting one or more communication protocols associated with communications. As such, the network 1530 or the interface's hardware can be operable to communicate physical signals within and outside of the illustrated computer 1502.

The computer 1502 includes a processor 1505. Although illustrated as a single processor 1505 in FIG. 15, two or more processors 1505 can be used according to particular needs, desires, or particular implementations of the computer 1502 and the described functionality. Generally, the processor 1505 can execute instructions and can manipulate data to perform the operations of the computer 1502, including operations using algorithms, methods, functions, processes, flows, and procedures as described in the present disclosure.

The computer 1502 also includes a database 1506 that can hold data for the computer 1502 and other components connected to the network 1530 (whether illustrated or not). For example, database 1506 can be an in-memory, conventional, or a database storing data consistent with the present disclosure. In some implementations, database 1506 can be a combination of two or more different database types (for example, hybrid in-memory and conventional databases) according to particular needs, desires, or particular implementations of the computer 1502 and the described functionality. Although illustrated as a single database 1506 in FIG. 15, two or more databases (of the same, different, or combination of types) can be used according to particular needs, desires, or particular implementations of the computer 1502 and the described functionality. While database 1506 is illustrated as an internal component of the computer 1502, in alternative implementations, database 1506 can be external to the computer 1502.

The computer 1502 also includes a memory 1507 that can hold data for the computer 1502 or a combination of components connected to the network 1530 (whether illustrated or not). Memory 1507 can store any data consistent with the present disclosure. In some implementations, memory 1507 can be a combination of two or more different types of memory (for example, a combination of semiconductor and magnetic storage) according to particular needs, desires, or particular implementations of the computer 1502 and the described functionality. Although illustrated as a single memory 1507 in FIG. 15, two or more memories 1507 (of the same, different, or combination of types) can be used according to particular needs, desires, or particular implementations of the computer 1502 and the described functionality. While memory 1507 is illustrated as an internal component of the computer 1502, in alternative implementations, memory 1507 can be external to the computer 1502.

The application 1508 can be an algorithmic software engine providing functionality according to particular needs, desires, or particular implementations of the computer 1502 and the described functionality. For example, application 1508 can serve as one or more components, modules, or applications. Further, although illustrated as a single application 1508, the application 1508 can be implemented as multiple applications 1508 on the computer 1502. In addition, although illustrated as internal to the computer 1502, in alternative implementations, the application 1508 can be external to the computer 1502.

The computer 1502 can also include a power supply 1514. The power supply 1514 can include a rechargeable or non-rechargeable battery that can be configured to be either user- or non-user-replaceable. In some implementations, the power supply 1514 can include power-conversion and management circuits, including recharging, standby, and power management functionalities. In some implementations, the power-supply 1514 can include a power plug to allow the computer 1502 to be plugged into a wall socket or a power source to, for example, power the computer 1502 or recharge a rechargeable battery.

There can be any number of computers 1502 associated with, or external to, a computer system containing computer 1502, with each computer 1502 communicating over network 1530. Further, the terms "client," "user," and other appropriate terminology can be used interchangeably, as appropriate, without departing from the scope of the present disclosure. Moreover, the present disclosure contemplates that many users can use one computer 1502 and one user can use multiple computers 1502.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs. Each computer program can include one or more modules of computer program instructions encoded on a tangible, non-transitory, computer-readable computer-storage medium for execution by, or to control the operation of, data processing apparatus. Alternatively, or additionally, the program instructions can be encoded in/on an artificially generated propagated signal. The example, the signal can be a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of computer-storage mediums.

The terms "data processing apparatus," "computer," and "electronic computer device" (or equivalent as understood by one of ordinary skill in the art) refer to data processing hardware. For example, a data processing apparatus can encompass all kinds of apparatus, devices, and machines for processing data, including by way of example, a programmable processor, a computer, or multiple processors or computers. The apparatus can also include special purpose logic circuitry including, for example, a central processing unit (CPU), a field programmable gate array (FPGA), or an application-specific integrated circuit (ASIC). In some implementations, the data processing apparatus or special purpose logic circuitry (or a combination of the data processing apparatus or special purpose logic circuitry) can be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example, LINUX, UNIX, WINDOWS, MAC OS, ANDROID, or IOS.

A computer program, which can also be referred to or described as a program, software, a software application, a module, a software module, a script, or code, can be written in any form of programming language. Programming languages can include, for example, compiled languages, interpreted languages, declarative languages, or procedural languages. Programs can be deployed in any form, including as stand-alone programs, modules, components, subroutines, or units for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files storing one or more modules, sub-programs, or portions of code. A computer program can be deployed for execution on one computer or on multiple computers that are located, for example, at one site or distributed across multiple sites that are interconnected by a communication network. While portions of the programs illustrated in the various figures may be shown as individual modules that implement the various features and functionality through various objects, methods, or processes, the programs can instead include a number of sub-modules, third-party services, components, and libraries. Conversely, the features and functionality of various components can be combined into single components as appropriate. Thresholds used to make computational determinations can be statically, dynamically, or both statically and dynamically determined.

The methods, processes, or logic flows described in this specification can be performed by one or more programmable computers executing one or more computer programs to perform functions by operating on input data and generating output. The methods, processes, or logic flows can also be performed by, and apparatus can also be implemented as, special purpose logic circuitry, for example, a CPU, an FPGA, or an ASIC.

Computers suitable for the execution of a computer program can be based on one or more of general and special purpose microprocessors and other kinds of CPUs. The elements of a computer are a CPU for performing or executing instructions and one or more memory devices for storing instructions and data. Generally, a CPU can receive instructions and data from (and write data to) a memory. A computer can also include, or be operatively coupled to, one or more mass storage devices for storing data. In some implementations, a computer can receive data from, and transfer data to, the mass storage devices including, for example, magnetic, magneto-optical disks, or optical disks. Moreover, a computer can be embedded in another device, for example, a mobile telephone, a personal digital assistant (PDA), a mobile audio or video player, a game console, a global positioning system (GPS) receiver, or a portable storage device such as a universal serial bus (USB) flash drive.

Computer-readable media (transitory or non-transitory, as appropriate) suitable for storing computer program instructions and data can include all forms of permanent/non-permanent and volatile/non-volatile memory, media, and memory devices. Computer-readable media can include, for example, semiconductor memory devices such as random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices. Computer-readable media can also include, for example, magnetic devices such as tape, cartridges, cassettes, and internal/removable disks. Computer-readable media can also include magneto-optical disks and optical memory devices and technologies including, for example, digital video disc (DVD), CD-ROM, DVD+/-R, DVD-RAM, DVD-ROM, HD-DVD, and BLURAY. The memory can store various objects or data, including caches, classes, frameworks, applications, modules, backup data, jobs, web pages, web page templates, data structures, database tables, repositories, and dynamic information. Types of objects and data stored in memory can include parameters, variables, algorithms, instructions, rules, constraints, and references. Additionally, the memory can include logs, policies, security or access data, and reporting files. The processor and the memory can be supplemented by, or incorporated in, special purpose logic circuitry.

Implementations of the subject matter described in the present disclosure can be implemented on a computer having a display device for providing interaction with a user, including displaying information to (and receiving input from) the user. Types of display devices can include, for example, a cathode ray tube (CRT), a liquid crystal display (LCD), a light-emitting diode (LED), and a plasma monitor. Display devices can include a keyboard and pointing devices including, for example, a mouse, a trackball, or a trackpad. User input can also be provided to the computer through the use of a touchscreen, such as a tablet computer surface with pressure sensitivity or a multi-touch screen using capacitive or electric sensing. Other kinds of devices can be used to provide for interaction with a user, including to receive user feedback including, for example, sensory feedback including visual feedback, auditory feedback, or tactile feedback. Input from the user can be received in the form of acoustic, speech, or tactile input. In addition, a computer can interact with a user by sending documents to, and receiving documents from, a device that is used by the user. For example, the computer can send web pages to a web browser on a user's client device in response to requests received from the web browser.

The term "graphical user interface," or "GUI," can be used in the singular or the plural to describe one or more graphical user interfaces and each of the displays of a particular graphical user interface. Therefore, a GUI can represent any graphical user interface, including, but not limited to, a web browser, a touch screen, or a command line interface (CLI) that processes information and efficiently presents the information results to the user. In general, a GUI can include a plurality of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server. Moreover, the computing system can include a front-end component, for example, a client computer having one or both of a graphical user interface or a Web browser through which a user can interact with the computer. The components of the system can be interconnected by any form or medium of wireline or wireless digital data communication (or a combination of data communication) in a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) (for example, using 802.11 a/b/g/n or 802.20 or a combination of protocols), all or a portion of the Internet, or any other communication system or systems at one or more locations (or a combination of communication networks). The network can communicate with, for example, Internet Protocol (IP) packets, frame relay frames, asynchronous transfer mode (ATM) cells, voice, video, data, or a combination of communication types between network addresses.

Wireless connections within the scope of the present disclosure include wireless protocols, such as, 802.15 protocols (e.g., a BLUETOOTH^{®}), 802.11 protocols, 802.20 protocols (e.g., WI-FI^{®}), or a combination of different wireless protocols.

The computing system can include clients and servers. A client and server can generally be remote from each other and can typically interact through a communication network. The relationship of client and server can arise by virtue of computer programs running on the respective computers and having a client-server relationship.

Cluster file systems can be any file system type accessible from multiple servers for read and update. Locking or consistency tracking may not be necessary since the locking of exchange file system can be done at application layer. Furthermore, Unicode data files can be different from non-Unicode data files.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any suitable sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the spirit and scope of the present disclosure.

Furthermore, any claimed implementation is considered to be applicable to at least a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium.

### Examples of the Present Disclosure:

### Example 1:

An example is directed to a system for controlling operation of one or more float arms of an agricultural header. The system may include a float arm pivotably connected to frame of the agricultural header. The float arm may be moveable between a locked configuration in which the float arm is secured in retracted position and an unlocked configuration in which the float arm is released from the retraced position. The system may also include a first valve movable between a first position configured to cause the float arm to move to the locked configuration and a second position configured to cause the float arm to move to the unlocked configuration; a first source of pressurized fluid in communication with the first valve and a second source of pressurized fluid in communication with the first valve. The first source of pressurized fluid may include a first fluid at a first fluid pressure, and the second source of pressurized fluid including a second fluid at a second fluid pressure. In the first position, the first valve may be configured to transmit the first fluid from the first source and, in response, to cause the float arm to move to the locked configuration. In the second position, the first valve may be configured to transmit the second fluid from the second fluid source and, in response, cause the float arm to move to the unlocked configuration.

The float arm may be pivotable over an angular range from a first limit position to a second limit position, and the first limit position may correspond to the float arm being in the locked configuration.

The second fluid pressure of the second fluid may be at a selected level such that, with the first valve in the second position, the float arm may occupy a location along the angular range away from the second limit position.

In the first position, the first valve may be configured to block passage of the second fluid. In the second position, the first valve may be configured to block passage of first fluid.

A gauge wheel movable between an extended position and a retracted position may be included.

In response to a first input, the gauge wheel may be movable to the retracted position, and the first valve may be moveable to the second position.

In response to a second input, the gauge wheel may be movable to the extended position, and the first valve may be moveable to the first position.

The first fluid pressure may be greater than the second fluid pressure. An actuator may be coupled to the float arm.

In the first position, the first valve may be configured to transmit the first fluid to the actuator to cause the actuator to move the float arm into the locked configuration, and, in the second position, the first valve may be configured to transmit the second fluid to the actuator to cause the actuator to move the float arm into the unlocked configuration.

A pressure relief valve may be configured to reduce a pressure transmitted by the first valve in response to the first valve being moved from the first position to the second position.

### Example 2:

An example is directed to an agricultural header. The agricultural header may include a first section and a wing section. The wing section may include a first end pivotably connected to the first section and a plurality of float arms. The plurality of float arms may be moveable between a locked configuration and an unlocked configuration. The agricultural header may also include a cutter bar including a first portion and second portion. The first portion of the cutter bar may extend along the first section, and the second portion of the cutter bar may extend along the wing section. The second portion may be connected to the plurality of float arms. The agricultural header may also include a float arm control system. The float arm control system may include a first valve movable between a first position configured to cause the plurality of float arms to move to the locked configuration and a second position configured to cause the plurality of float arms to move to the unlocked configuration; a first pressurized fluid in communication with the first valve; and a second pressurized fluid in communication with the first valve. The first pressurized may have a first fluid pressure, and the second pressurized fluid may have a second fluid pressure. In the first position, the first valve may be configured to transmit the first pressurized fluid and, in response, cause the plurality of float arms to move to the locked configuration. In the second position, the first valve may be configured to transmit the second pressurized fluid and, in response, cause the float arm to move to the unlocked configuration.

Each of the plurality of float arms may be pivotable over an angular range from a first limit position to a second limit position, and the first limit position may correspond to a first float arm position occupied by the plurality of float arms when in the locked configuration.

The second fluid pressure may be selected such that, in the unlocked configuration, the plurality of float arms is biased away from the second limit position.

A gauge wheel may be movable between an extended position and a retracted position.

In response to a first input, the gauge wheel may be moveable to the retracted position, and the first valve may be moveable to the second position.

In response to a second input, the gauge wheel may be moveable to the extended position, and the first valve may be moveable to the first position.

The first fluid pressure may be greater than the second fluid pressure.

Each actuator of a plurality of actuators may be coupled to an associated float arm of the plurality of float arms.

In the first position, the first valve may be configured to transmit the first fluid to the plurality of actuators to cause the plurality of actuators to move the plurality of float arms into the locked configuration, and, in the second position, the first valve may be configured to transmit the second fluid to the plurality of actuators to cause the plurality of actuators to move the plurality of float arms into the unlocked configuration.

A pressure relief valve may be configured to reduce a pressure transmitted by the first valve in response to the first valve being moved to the second position.

### Example 3:

An example system for controlling operation of one or more float arms of an agricultural header may include: a float arm pivotably connected to a frame of the agricultural header; a source of pressurized fluid including a fluid at a first fluid pressure; a first valve in fluid communication with the source of pressurized fluid; a second valve positioned downstream of the first valve; an accumulator; and a third valve. The float arm is moveable between a locked configuration in which the float arm is secured in a retracted position and an unlocked configuration in which the float arm is released from the retracted position. The first valve is movable between a first position in which the first valve transmits passage of the fluid from the source of pressurized fluid and a second position that prevents passage of the fluid from the source of pressurized fluid. The second valve is movable between a third position configured to provide fluid communication to a first location downstream of the second valve and a fourth position configured to prevent fluid communication with the first location. The third valve is disposed between accumulator and the first location. The third valve is movable between a fifth position to isolate the accumulator from the first location and a sixth position to provide fluid communication between the accumulator and the first location. The second valve, in the third position, is configured to permit flow of the fluid from the source of pressurized fluid to the first location to cause the float arm to move to the locked configuration in response to the first valve being in the first position, and, in the third position, the second valve is configured to permit flow of the fluid from the first location to cause the float arm to move to the unlocked configuration in response to the first valve being in the second position.

The third valve may be configured to be moved to the fifth position in response to the first valve being positioned in the first position and the second valve being positioned in the third position to prevent fluid from the source of pressurized fluid from pressurizing the accumulator while the float arm is moved to the locked configuration.

The third valve may be configured to be maintained in the sixth position in response to the float arm being in the locked configuration.

The third valve may be configured to be positioned in the fifth position in response to the first valve being positioned in the second position and the second valve being positioned in the third position to release fluid from the first location and move the float arm into the unlocked configuration.

The example system may also include a pressure sensor configured to sense a pressure of the first location. In response to the pressure of the fluid at the first location being at a selected pressure and the first valve being in the first position, the second valve is moved to the fourth position to maintain the float arm in a locked configuration.

The example system may also include a pressure sensor configured to sense a fluid pressure of fluid at the first location. In response to the fluid pressure of the fluid at the first location being at a first selected pressure and the first valve being in the first position, the second valve is moved to the third position and the third valve is moved to the sixth position. In response to the pressure of the fluid at the first location being at a second selected pressure, the second valve is moved to the fourth position and the third valve is maintained in the sixth position in response to the pressure of the fluid at the first location being at a second selected pressure to maintain the float arms in an unlocked configuration.

The example system may also include a pressure relief valve configured to bypass the third valve in response to a pressure in the first location exceeding a selected pressure.

The example system may also include a fourth valve disposed between the first valve and the accumulator. The fourth valve is movable between a seventh position to provide fluid communication to the accumulator and an eight position to cease fluid communication through the fourth valve. The fourth valve is configured to be moved to the seventh position in response to the third valve being moved into the fifth position, the second valve being moved to the fourth position, and the first valve being moved into the first position to permit application of fluid pressure to the accumulator from the source of pressurized fluid while isolated from the first location.

### Example 4:

An example system for controlling operation of a float arm of an agricultural header may include: a frame of the agricultural header; a float arm pivotably connected to the frame; a first valve configured selectively to control flow of fluid from a source of pressurized fluid; a second valve disposed downstream of the first valve; and an actuator. The float arm is movable between a locked configuration in which the float arm is secured in a retracted position and an unlocked configuration in which the float arm is released from the retracted position. The second valve selectively movable into an open position to permit passage of fluid to a first location downstream of the second valve and a closed position to prevent passage of fluid to the first location. The actuator is disposed at the first location, the actuator coupled to the float arm and configured to move the float arm between the locked configuration and the unlocked configuration. The example system may also include one or more processors and a non-transitory computer-readable storage medium coupled to the one or more processors and storing programming instructions for execution by the one or more processors. The programming instructions may instruct the one or more processors to: in response to a received input to place the float arm in the locked configuration; open the first valve or maintain the first valve in the open position; open the second valve or maintain the second valve in the open position; and actuate the actuator to move the float arm into or towards the locked configuration in response to fluid flow into the first location through the second valve, or, in response to a received input to place the float arm in the unlocked configuration, close the first valve or maintain the first valve in a closed position; open the second valve or maintain the second valve in the open position; and actuate the actuator to move the float arm into the unlocked configuration or from one position in the unlocked configuration to a second position in the unlocked configuration in response to fluid flow from the first location through the second valve.

The example system may also include an accumulator in fluid communication with the actuator and a third valve disposed between the accumulator and the actuator. The third valve may be configured to control a flow of fluid to the accumulator. In response to the received input to place the float arm in the unlocked configuration, the programming instructions further include programming instructions to instruct the one or more processors to open the third valve to provide fluid communication between the first location and an accumulator.

The example system may also include a fluid pressure sensor configured to sense a pressure of fluid in at the first location. In response to the received input to place the float arm in the locked configuration, the programming instructions may further include programming instructions instruct the one or more processors to: sense a fluid pressure in the first location with the fluid pressure sensor; compare the fluid pressure to a threshold fluid pressure; and close the second valve in response to the fluid pressure satisfying the threshold fluid pressure.

### Example 5:

An example method of controlling a configuration of a float arm of an agricultural header may include: one of placing the float arm into a locked configuration or placing the float arm into an unlocked configuration. Placing the float arm into the locked configuration may include: opening a first valve or maintaining the first valve in an open position to permit passage of fluid from a source of pressurized fluid through the first valve; opening a second valve to permit flow of the fluid into a first location downstream of the second valve; and moving the float arm into a locked configuration or towards the locked configuration in response to passage of the fluid into the first location. Placing the float arm into an unlocked configuration may include closing the first valve or maintain the first valve in a closed configuration to prevent passage of the fluid from the source of pressurized fluid; opening the second valve to permit passage of the fluid from the first location; and moving the float arm into the unlocked configuration or from one location to another location in the unlocked configuration in response to passage of the fluid from the first location.

Placing the float arm into the locked configuration may include sensing a fluid pressure of the fluid in the first location; comparing the pressure with a selected fluid pressure threshold; and closing the second valve in response to the fluid pressure satisfying the selected fluid pressure threshold.

Placing the float the unlocked configuration may include sensing a fluid pressure of fluid in the first location; comparing the pressure with a selected fluid pressure threshold; and closing the second valve in response to the fluid pressure satisfying the selected fluid pressure threshold to maintain fluid pressure in the first location at the selected fluid pressure threshold.

The example method may also include opening a third valve to provide fluid communication between the first location and an accumulator.

Moving the float arm into a locked configuration or towards the locked configuration in response to passage of the fluid into the first location may include actuating an actuator in response to the fluid passed to the first location.

Moving the float arm into the unlocked configuration or from one location to another location in the unlocked configuration in response to passage of the fluid from the first location may include actuating an actuator in response to passage of the fluid from the first location.

Moving the float arm into a locked configuration or towards the locked configuration in response to passage of the fluid into the first location includes pivoting the float arm about a pivot axis into the locked configuration in response to actuation of a hydraulic cylinder in response to passage of the fluid into the first location.

Moving the float arm into the unlocked configuration or from one location to another location in the unlocked configuration in response to passage of the fluid from the first location includes pivoting the float arm about a pivot axis into the unlocked configuration in response to actuation of a hydraulic cylinder in response to passage of the fluid from the first location.

Placing the float arm into an unlocked configuration may include opening a third valve to provide fluid communication between an accumulator and the source of pressurized fluid via the first valve and charging the accumulator with the source of pressurized fluid.

Placing the float arm into an unlocked configuration may include detecting a pressure of accumulator; determining whether the pressure of the accumulator satisfies a threshold pressure; and closing the third valve in response to the pressure satisfies the threshold pressure.

Placing the float arm into an unlocked configuration may include opening a fourth valve disposed between the accumulator and the first location in response to closure of the third valve in response to the pressure satisfying the threshold pressure.

### Example 6:

An example system for controlling operation of one or more float arms of an agricultural header may include: a float arm pivotably connected to frame of the agricultural header, the float arm moveable between a locked configuration in which the float arm is secured in retracted position and an unlocked configuration in which the float arm is released from the retraced position; a first valve movable between a first position configured to cause the float arm to move to the locked configuration and a second position configured to cause the float arm to move to the unlocked configuration; a first source of pressurized fluid in communication with the first valve, the first source of pressurized fluid including a first fluid at a first fluid pressure; a second source of pressurized fluid in communication with the first valve, the second source of pressurized fluid including a second fluid at a second fluid pressure; and a second valve in fluid communication with the second source of pressurized fluid. The first valve, in the first position, is configured to transmit the first fluid from the first source to a first location and, in response, to cause the float arm to move to the locked configuration and, in the second position, is configured to transmit the second fluid from the second fluid source and, in response, cause the float arm to move to the unlocked configuration. The second valve is configured to adjust a fluid pressure at the first location along a pressure range.

The second valve may be a proportional valve.

The proportional valve may be a solenoid operated proportional valve.

The pressure range may be between 550 pounds per square inch (psi) (3.8 megapascals (MPa)) and 2200 psi (15.2 MPa).

The float arm may be pivotable over an angular range from a first limit position to a second limit position and wherein the first limit position corresponds to the float arm being in the locked configuration.

The second fluid pressure of the second fluid may be at a selected level such that, with the first valve in the second position, the float arm occupies a location along the angular range away from the second limit position.

In the first position, the first valve may be further configured to block passage of the second fluid.

In the second position, the first valve may be further configured to block passage of first fluid.

The example system may also include a gauge wheel movable between an extended position and a retracted position.

In response to a first input, the gauge wheel may be moved to the retracted position and the first valve is moved to the second position.

In response to a second input, the gauge wheel may be moved to the extended position and the first valve is moved to the first position.

The example system may also include an actuator coupled to the float arm. In the first position, the first valve is configured to transmit the first fluid to the actuator to cause the actuator to move the float arm into the locked configuration, and, in the second position, the first valve is configured to transmit the second fluid to the actuator to cause the actuator to move the float arm into the unlocked configuration, the second fluid being at a selected pressure along the pressure range in response to adjustment by the second valve.

### Example 7:

An example agricultural header may include: a first section; a wing section including a first end pivotably connected to the first section, the wing section including a plurality of float arms, the plurality of float arms moveable between a locked configuration and an unlocked configuration; a cutter bar including a first portion and second portion, the first portion of the cutter bar extending along the first section and the second portion of the cutter bar extending along the wing section, the second portion connected to the plurality of float arms; and a float arm control system. The float arm control system may include: a first valve movable between a first position configured to cause the plurality of float arms to move to the locked configuration and a second position configured to cause the plurality of float arms to move to the unlocked configuration; a first pressurized fluid in communication with the first valve, the first pressurized having a first fluid pressure; a second pressurized fluid in communication with the first valve, the second pressurized fluid having a second fluid pressure; and a second valve in fluid communication with the second pressurized fluid. The first valve, in the first position, is configured to transmit the first pressurized fluid to a first location and, in response, to cause the plurality of float arms to move to the locked configuration. In the second position, the first valve is configured to transmit the second pressurized fluid and, in response, cause the float arm to move to the unlocked configuration, and the second valve is configured to adjust a fluid pressure at the first location along a pressure range.

The example agricultural header may also include a hydraulic actuator coupled to the float arm. The hydraulic actuator may be configured to move the float arm into the locked configuration in response to movement of the first valve into the first position, and the hydraulic actuator may be configured to move the float arm into the unlocked configuration in response to movement of the first valve into the second position.

The second valve may be a proportional valve.

The float arm may be pivotable over an angular range from a first limit position to a second limit position and wherein the first limit position corresponds to the float arm being in the locked configuration.

The second fluid pressure of the second fluid may be at a selected level such that, with the first valve in the second position, the float arm occupies a location along the angular range away from the second limit position.

The example agricultural header may also include a gauge wheel movable between an extended position and a retracted position.

In response to a first input, the gauge wheel may be moved to the retracted position and the first valve is moved to the second position.

In response to a second input, the gauge wheel may be moved to the extended position and the first valve is moved to the first position.

### Example 8:

An example system for controlling operation of one or more float arms of an agricultural header may include: a float arm pivotably connected to frame of the agricultural header, the float arm moveable between a locked configuration in which the float arm is secured in retracted position and an unlocked configuration in which the float arm is released from the retraced position; a source of pressurized fluid including a fluid at a first fluid pressure; and a proportional valve that includes a first operational range and a second operational range. The proportional valve is alterable into a first plurality of configurations within the first operational range to produce a first plurality of fluid flow rates of the fluid to the first location. Each configuration of the first plurality of configurations corresponds to a different fluid flow rate of the first plurality of fluid flow rates. Each of the different fluid flow rates associated with the first plurality of configurations is operable to move the float arm into the locked configuration at a different corresponding rate of movement. The proportional valve is alterable into a second plurality of configuration within the second operational range to produce a second plurality of fluid flow rates of the fluid from the first location. Each configuration of the first plurality of configurations corresponds to a different fluid flow rate of the second plurality of fluid flow rates, and each of the different fluid flow rates associated with the second plurality of configurations is operable to move the float arm into the unlocked configuration at a different corresponding rate of movement.

A first specified rate of movement associated with a first operational configuration of the proportional valve along the first operation range may be different from a second specified rate of movement associated with a second operation configuration of the proportional valve along the first operational range.

A fluid flow rate of the first plurality of fluid flow rates may progressively increase in response to advancement along the first plurality of configurations within the first operational range.

A fluid flow rate of the second plurality of fluid flow rates may progressively increase in response to advancement along the second plurality of configurations within the second operational range.

The specified rate of movement may progressively increase in response to an increase in flow rate.

The float arm may be pivotable over an angular range from a first limit position to a second limit position, and the first limit position may correspond to the float arm being in the locked configuration.

The example system may also include a fluid pressure sensor configured to sense a fluid pressure of the fluid in the first location. The proportional valve may include a closed configuration that prevents passage of the fluid into or out of the first location, and the proportional valve may be configured into the closed configuration from the first operational range in response to a fluid pressure sensed by the fluid pressure sensor satisfying a selected fluid pressure.

The example system may also include a fluid pressure sensor configured to sense a fluid pressure of the fluid in the first location. The proportional valve may include a closed configuration that prevents passage of the fluid into or out of the first location. The proportional valve may be configured into the closed configuration from the second operational range in response to a fluid pressure sensed by the fluid pressure sensor satisfying a selected fluid pressure.

The float arm may be pivotable over an angular range from a first limit position to a second limit position. The first limit position may correspond to the float arm being in the locked configuration, and, in response to the selected fluid pressure, the float arm may occupy a location along the angular range displaced from first limit position and the second limit position.

The example system may also include an accumulator in fluid communication with the first location.

### Example 9:

An example agricultural header may include: a first section; a wing section including a first end pivotably connected to the first section, the wing section including a float arm, the float arm moveable between a locked configuration in which the float arm is secured in a retracted position and an unlocked configuration in which the float arm is released from the retracted position; a cutter bar including a first portion and second portion, the first portion of the cutter bar extending along the first section and the second portion of the cutter bar extending along the wing section, the second portion connected to the float arm; and a float arm control system. The float arm control system may include a source of pressurized fluid including a fluid at a first fluid pressure and a proportional valve. The proportional valve includes a first operational range configured to control a first rate of movement of the float arm into the locked configuration and a second operational range configured to control a second rate of movement of the float arm into the unlocked configuration. The first rate of movement progressively increases in response to the proportional valve being progressively advanced along the first operational range, and the second rate of movement is progressively adjusted in response to the proportional valve being progressively adjusted along the second operational range.

Progressive adjustment of the proportional valve along the first operational range may be operable to generate an increased fluid flow rate of the fluid into a first location. The fluid flow rate into the first location may control the first rate of movement of the float arm into the locked configuration.

Progressive adjustment of the proportional valve along eth second operational range may be operable to generate an increased fluid flow rate of the fluid from the first location. The fluid flow rate from the first location may control the second rate of movement of the float arm into the unlocked configuration.

The float arm may be pivotable over an angular range from a first limit position to a second limit position, and the first limit position may correspond to the float arm being in the locked configuration.

The example agricultural header may include a fluid pressure sensor configured to sense a fluid pressure of the fluid in the first location. The proportional valve may be configured to prevent fluid flow of the first fluid into the first location in response to the fluid pressure sensed by the fluid pressure sensor satisfying a selected fluid pressure.

The example agricultural header may include a fluid pressure sensor configured to sense a fluid pressure of the fluid in the first location. The proportional valve may be configured to prevent fluid flow of the first fluid from the first location in response to the fluid pressure sensed by the fluid pressure sensor satisfying a selected fluid pressure.

The float arm may be pivotable over an angular range from a first limit position to a second limit position. The first limit position may correspond to the float arm being in the locked configuration, and, in response to the selected fluid pressure, the float arm may occupy a location along the angular range displaced from first limit position and the second limit position.

### Example 10:

An example method of controlling a position of a float arm of an agricultural header may include moving a float arm of the agricultural header into a locked configuration or moving the float arm of the agricultural header into an unlocked configuration. Moving the float arm of the agricultural header into the locked configuration may include selectively operating a proportional valve within a first operational range in response to a first input, the input indicative of a rate at which a float arm of the agricultural header is to be moved into a locked configuration; flowing a fluid from a source of pressurized fluid into a first location in response to the selective operation of the proportional valve within the first operational range; and moving the float arm into a first position corresponding to the locked configuration. Moving the float arm of the agricultural header into an unlocked configuration may include: selectively operating the proportional valve within a second operational range in response to a second input indicative of a rate at which the float arm of the agricultural header is to be moved into an unlocked configuration; flowing the fluid first location in response to the selective operation of the proportional valve within eh second operational range; and moving the float arm into a second portion corresponding to an unlocked configuration.

Moving the float arm of the agricultural header into an unlocked configuration may further include sensing, with a fluid pressure sensor, a fluid pressure of the pressure in the first location. Selectively operating the proportional valve within the second operational range in response to the second input indicative of the rate at which the float arm of the agricultural header is to be moved into an unlocked configuration may include selectively configuring the proportional valve into a closed condition in which fluid flow of the fluid from the first location is prevented in response to the fluid pressure sensed by the fluid pressure sensor satisfying a selected fluid pressure.

Moving the float arm into a second portion corresponding to an unlocked configuration may include pivoting the float arm to a selected position along an angular range between a first limit position corresponding to the locked configuration and a second limit position. The selected position may be displaced form the first limit position.

While the above describes example implementations of the present disclosure, these descriptions should not be viewed in a limiting sense. Rather, other variations and modifications may be made without departing from the scope and spirit of the present disclosure as defined in the appended claims.

## Claims

1. A system for controlling operation of one or more float arms of an agricultural header, the system comprising:
a float arm pivotably connected to a frame of the agricultural header, the float arm moveable between a locked configuration in which the float arm is secured in a retracted position and an unlocked configuration in which the float arm is released from the retracted position;
a source of pressurized fluid including a fluid at a first fluid pressure;
a first valve in fluid communication with the source of pressurized fluid, the first valve movable between a first position in which the first valve transmits passage of the fluid from the source of pressurized fluid and a second position that prevents passage of the fluid from the source of pressurized fluid; and
a second valve positioned downstream of the first valve, the second valve movable between a third position configured to provide fluid communication to a first location downstream of the second valve and a fourth position configured to prevent fluid communication with the first location;
the second valve, in the third position, being configured to permit flow of the fluid from the source of pressurized fluid to the first location to cause the float arm to move to the locked configuration in response to the first valve being in the first position, and, in the third position, configured to permit flow of the fluid from the first location to cause the float arm to move to the unlocked configuration in response to the first valve being in the second position.

2. The system of claim 1, further comprising a pressure sensor at a location downstream of the first valve, the pressure sensor configured to sense a pressure of the fluid at the first location,
wherein the second valve is movable to the fourth position in response to the sensed pressure at the first location satisfying a first threshold pressure value.

3. The system of claim 1, wherein the second valve includes an orifice configured to control a flow rate of fluid through the first valve.

4. The system of claim 4, wherein the flow rate is within a range of five liters per min (L/min) (1.3 gallons per minute (gal/min) to 20 L/min (5.3 gal/min).

5. The system of claim 1, further comprising a gauge wheel movable between an extended position and a retracted position.

6. The system of claim 6, wherein, in response to a first input, the gauge wheel is moved to the retracted position, the first valve is moved the second position, and the second valve is moved the third position.

7. The system of claim 7, wherein, in response to a second input, the gauge wheel is moved to the extended position, the first valve is moved the first position, and the second valve is moved to the third position.

8. The system of claim 1, further comprising an actuator coupled to the float arm,
wherein, in response to the first valve being positioned in the first position and the second valve being positioned in the third position, fluid from the source of pressurized fluid actuates the actuator to move the float arm into the locked configuration.

9. The system of claim 1, further comprising an actuator coupled to the float arm,
wherein, in response to the first valve being in the second position and the second valve being in the third position, fluid is released from the first location to actuate the actuator to move the float arm into the unlocked configuration.

10. A method of actuating a float arm between one of a locked configuration and an unlocked configuration, the method comprising selectively configuring a first valve and a second valve to transmit fluid from a source of pressurized fluid to a first location to move a float arm between a locked configuration and an unlocked configuration.

11. The method of claim 10, wherein selectively configuring the first valve and the second valve comprises:
moving the first valve that is movable between a first position and a second to the first position to transmit fluid from a source of pressurized fluid to a second valve;
moving the second valve moveable between a third position and a fourth position, to a third position to transmit the fluid from the source of pressurized fluid to a first location; and
placing the float arm in the locked configuration in response to the fluid being transmitted to the first location.

12. The method of claim 11, further comprising:
sensing a pressure of the fluid in the first location; and
moving the second valve to the fourth position to prevent transmission of fluid from the source of pressurized fluid to the first location in response to the pressuring satisfying a selected pressure threshold.

13. The method of claim 10, wherein selectively configuring the first valve and the second valve comprises:
moving the first valve to the second position or maintaining the first valve in the second position; and
moving the second valve to the third position to cause the fluid to flow out of the first location; and
placing the float arm in the unlocked configuration in response to flow of the fluid out of the first location.
